# EUROPEAN PATENT APPLICATION

(11) **EP 4 385 384 A1**
(43) Date of publication of application: **19.06.2024**
(21) Application number: 22857487.7
(22) Date of filing: 14.07.2022
(51) Int. Cl.: A47L 11/24, A47L 11/40, G05D 1/02, G01S 7/481, G01S 17/894, G01S 17/931, G01S 17/933

(54) **STRUCTURED LIGHT MODULE AND SELF-MOVING DEVICE**

(30) Priority: 17.08.2021 CN 202110944997; 17.08.2021 CN 202110944998
(71) Applicant: Ecovacs Robotics Co., Ltd., Suzhou, Jiangsu 215168 (CN)
(72) Inventor: XU, Kaili, Suzhou, Jiangsu 215168 (CN); LUO, Xiao, Suzhou, Jiangsu 215168 (CN); SHAN, Junjie, Suzhou, Jiangsu 215168 (CN); CHEN, Wei, Suzhou, Jiangsu 215168 (CN); WU, Yongdong, Suzhou, Jiangsu 215168 (CN); ZHANG, Peng, Suzhou, Jiangsu 215168 (CN); LIU, Yang, Suzhou, Jiangsu 215168 (CN)
(74) Representative: Renaudo, Adrien Hanouar
(86) International application number: PCT/CN2022/105817
(87) International publication number: WO 2023/020174

(57) **Abstract**

The application provides a structured light module and an autonomous mobile device. The structured light module includes a first camera and line laser emitters for collecting a first environmental image containing laser stripes generated when the line laser encounters an object. The structured light module can also capture a visible light image through a second environmental image that does not contain laser stripes. Both the first and second environmental images can help to detect more accurate and richer environmental information, expanding the application range of laser sensors.

## Description

### Cross Reference

This application claims priority to Chinese patent application number 2021109449980, titled "Structured Light Module and Autonomous Mobile Device", filed on August 17, 2021, which is incorporated herein by reference in its entirety.

This application also claims priority to Chinese patent application number 2021109449976, titled "Operating Method, Autonomous Mobile Device, and Storage Medium", filed on August 17, 2021, which is incorporated herein by reference in its entirety.

### Technical Field

This application relates to the field of artificial intelligence technology, particularly to a structured light module and an autonomous mobile device.

### Background

With the popularization of laser technology, the application of laser sensors has been gradually explored. Among them, obstacle recognition and avoidance are important application directions for laser sensors. As the requirements for laser sensors in various fields become increasingly demanding, existing laser-type sensors are no longer able to meet the application needs of users, necessitating the proposal of new laser sensor structures.

### Summary

Multiple aspects of this application provide a structured light module and an autonomous mobile device, which aim to offer a new structured light module and expand the application scope of laser sensors.

One embodiment of the application provides a structured light module comprising: a first camera and line laser emitters located on both sides of the first camera. The structured light module also includes: a second camera. The line laser emitters are responsible for emitting line lasers, the first camera is used to collect a first environmental image detected by the line laser during its emission, and the second camera is used to collect a second environmental image within its field of view. The first environmental image is a laser image containing laser stripes generated when the line laser encounters an object, while the second environmental image is a visible light image that does not contain laser stripes.

One embodiment of the application also provides an autonomous mobile device, comprising: a device body, a main controller, and a structured light module set on the device body, with the main controller electrically connected to the structured light module. The structured light module includes: a first camera, line laser emitters distributed on both sides of the first camera, a second camera, and a module controller. The module controller controls the line laser emitters to emit line lasers and the first camera to collect a first environmental image detected by the line laser during its emission, and sends the first environmental image to the main controller. The main controller controls the second camera to collect a second environmental image within its field of view and performs functional control of the autonomous mobile device based on the first and second environmental images. Here, the first environmental image includes laser stripes generated when the line laser encounters an object, and the second environmental image is a visible light image without laser stripes.

In this embodiment, the structured light module can collect the first environmental image containing laser stripes generated when the line laser encounters an object through the cooperation of the first camera and line laser emitters, and can also collect the second environmental image, a visible light image without laser stripes. The first and second environmental images can help to detect more comprehensive environmental information more accurately, expanding the application scope of laser sensors.

Multiple aspects of this application provide an operation method, an autonomous mobile device, and a storage medium, to meet more detailed operational needs.

One embodiment of the application provides an operating method applicable to autonomous mobile devices equipped with structured light modules. The method includes: using the structured light components and visual sensors in the structured light module to collect structural light data and image data of the operation area ahead of the autonomous mobile devices; based on image data, identifying a category of a target object in the operation area ahead, and selecting a target machine behavior mode that matches the category of the target object; based on structural light data, controlling the autonomous mobile device to perform an operation task in connection with the target object in the operation area ahead according to the target machine behavior mode.

One embodiment of the application also provides an autonomous mobile device, comprising: a device body, one or more memory units, one or more processors, and a structured light module set on the device body. The structured light module includes: structured light components and visual sensors. One or more memory units are used for storing computer programs; one or more processors are used for executing the computer programs, to: use the structured light components and visual sensors in the structured light module to collect structural light data and image data of an operation area ahead of the autonomous mobile device; based on the image data, identify a category of a target object in the operation area ahead, select a target machine behavior mode that matches the category of the target object; and based on the structural light data, control the autonomous mobile device to perform an operation task in connection with the target objects in the operation area ahead according to the target machine behavior mode.

One embodiment of the application also provides a computer-readable storage medium containing computer instructions. When executed by one or more processors, the computer instructions cause the processors to execute the steps in the operating method embodiments of the autonomous mobile device provided by this application.

### Description of Drawings

The accompanying drawings are included to provide a further understanding of the application and are incorporated in and constitute a part of this application. The illustrative embodiments and their descriptions herein are used to explain the application and do not impose improper limitations on the application. In the drawings:
Fig. 1a is a schematic diagram of a structure of a structured light module provided by an exemplary embodiment of this application.
Fig. 1b is a schematic diagram illustrating a working principle of a line laser emitter provided by an exemplary embodiment of this application.
Fig. 1c is a schematic diagram of another structured light module provided by an exemplary embodiment of this application.
Fig. 1d is a schematic diagram showing a relationship between installation positions of various components in a structured light module provided by an exemplary embodiment of this application.
Fig. 1e is a schematic diagram showing a relationship between a line laser of a line laser emitter and a field of view of a first camera, provided by an exemplary embodiment of this application.
Fig. 1f is a schematic diagram of another structured light module provided by an exemplary embodiment of this application.
Fig. 1h is a front view of a structured light module provided by an exemplary embodiment of this application.
Fig. 1i is an axial side view of a structured light module provided by an exemplary embodiment of this application.
Fig. 1j to 1m are various exploded views of a structured light module provided by an exemplary embodiment of this application.
Fig. 1n is a partial view of a structured light module provided by an exemplary embodiment of this application.
Fig. 1o is a sectional view of Fig. 1n.
Fig. 1p is a sectional view of a structured light module provided by an exemplary embodiment of this application.
Fig. 1q is a rear view of a structured light module provided by an exemplary embodiment of this application.
Fig. 1r is another partial view of a structured light module provided by an exemplary embodiment of this application.
Fig. 1s is another sectional view of a structured light module provided by an exemplary embodiment of this application.
Fig. 1t is a schematic diagram showing the tilt of a first camera or line laser emitter in a structured light module provided by an exemplary embodiment of this application.
Fig. 1u is a schematic diagram of an autonomous mobile device detecting a test object, provided by an exemplary embodiment of this application.
Fig. 1v is a sectional view of a wave mirror provided by an exemplary embodiment of this application.
Fig. 1w is a light intensity distribution diagram of a line laser emitter with a wave mirror provided by an exemplary embodiment of this application.
Fig. 1x is a schematic diagram of the structure of a cylindrical mirror provided by an exemplary embodiment of this application.
Fig. 1y is a light intensity distribution diagram of a line laser emitter with a cylindrical mirror provided by an exemplary embodiment of this application.
Fig. 2a is a schematic diagram of the structure of an autonomous mobile device provided by an exemplary embodiment of this application.
Fig. 2b is a schematic diagram of the structure of a structured light module in an autonomous mobile device provided by an exemplary embodiment of this application.
Fig. 2c and Fig. 2d are respective exploded schematic diagrams of a structured light module and a bumper provided by an exemplary embodiment of this application.
Fig. 2e is a schematic diagram of a bumper equipped with a structured light module provided by an exemplary embodiment of this application.
Fig. 2f is a schematic diagram of the structure of a sweeping robot provided by an exemplary embodiment of this application.

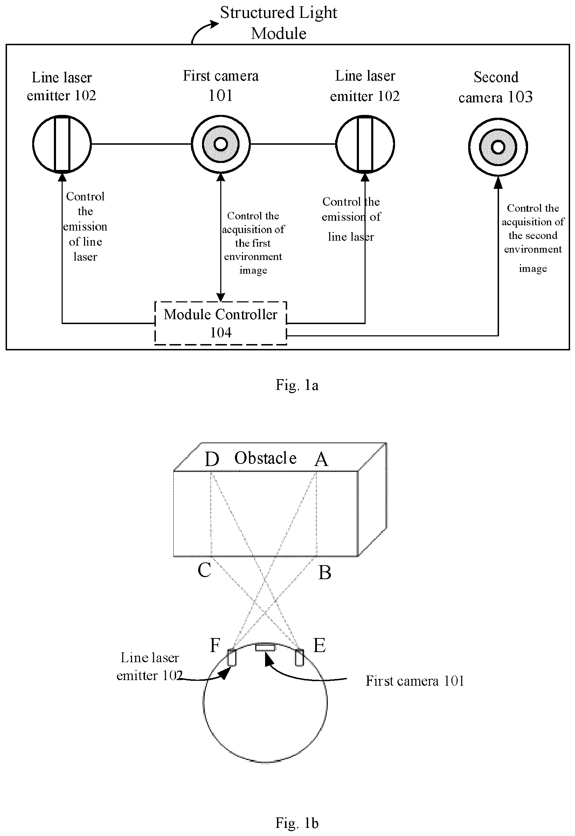

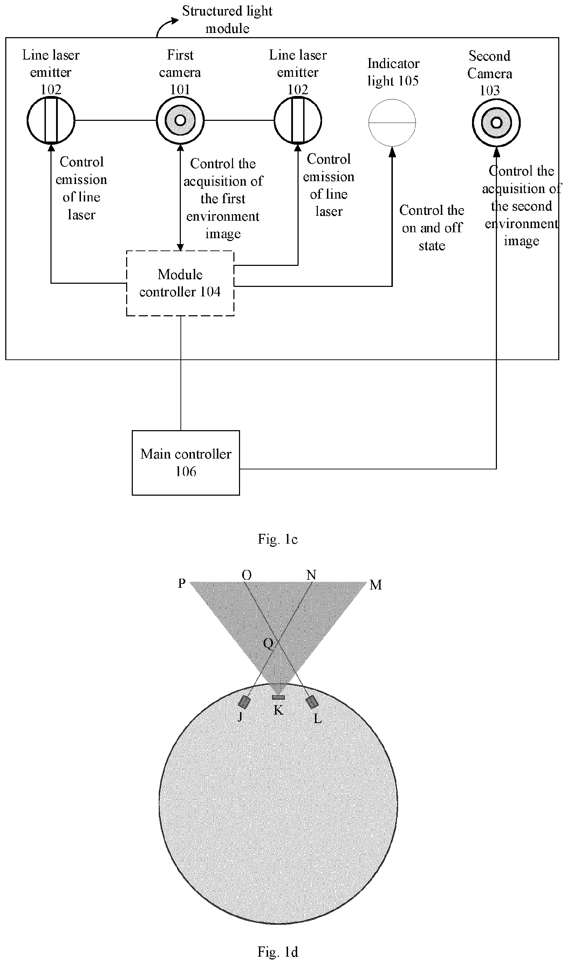

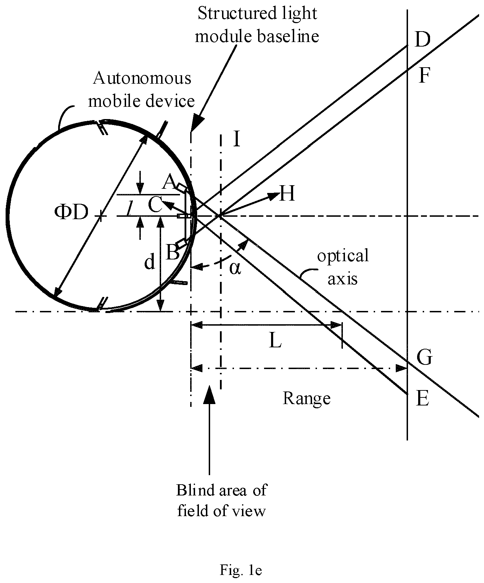

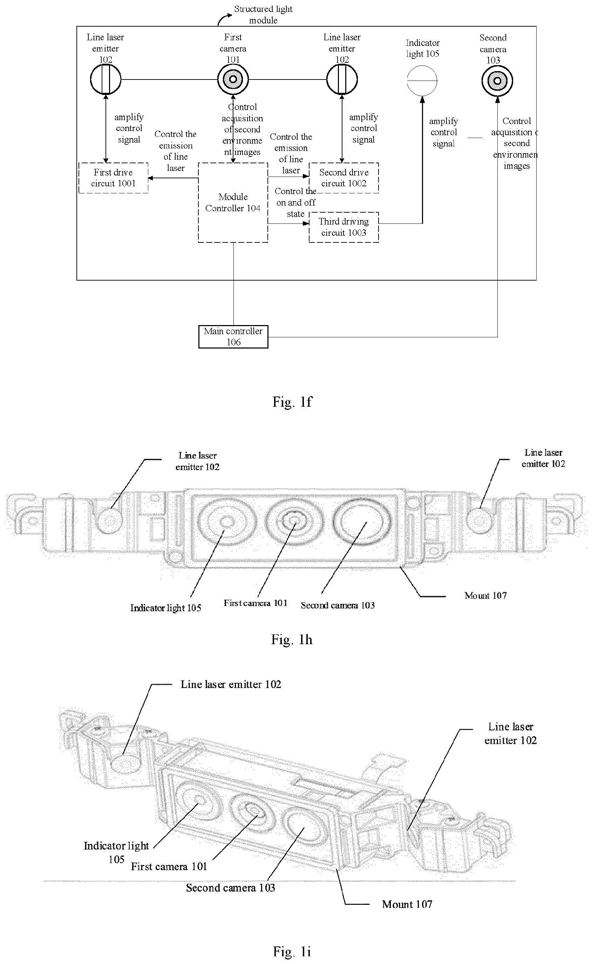

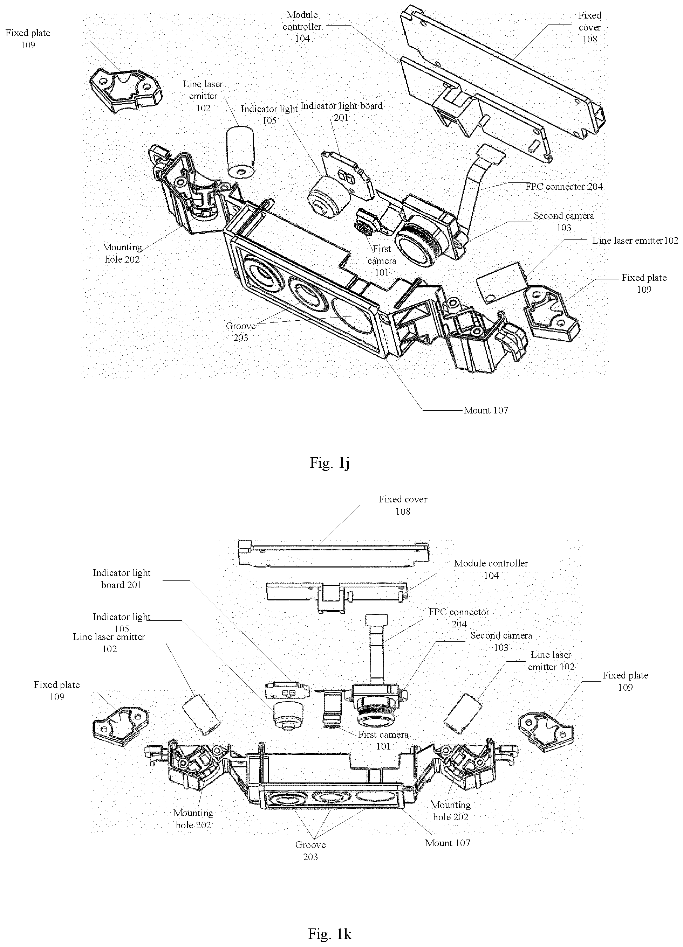

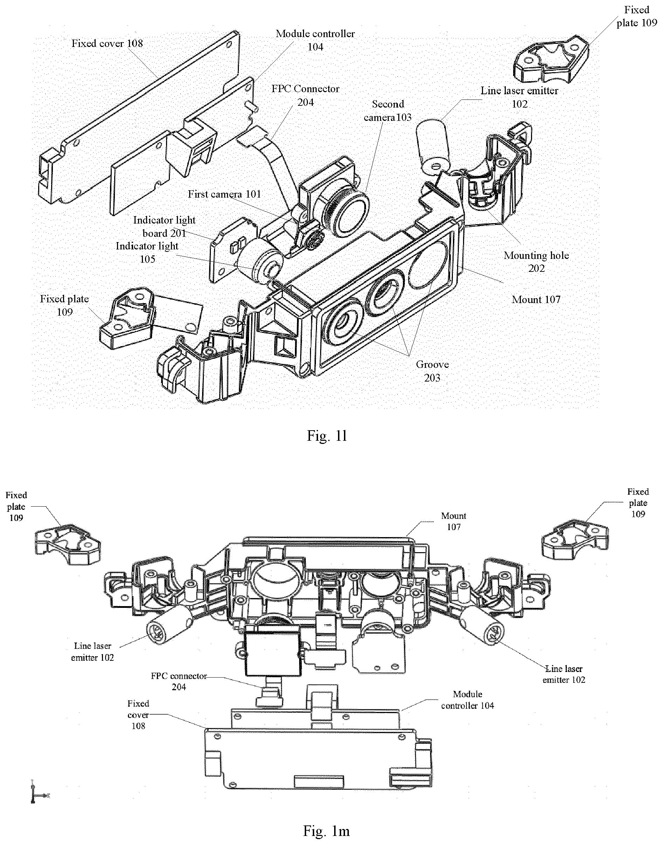

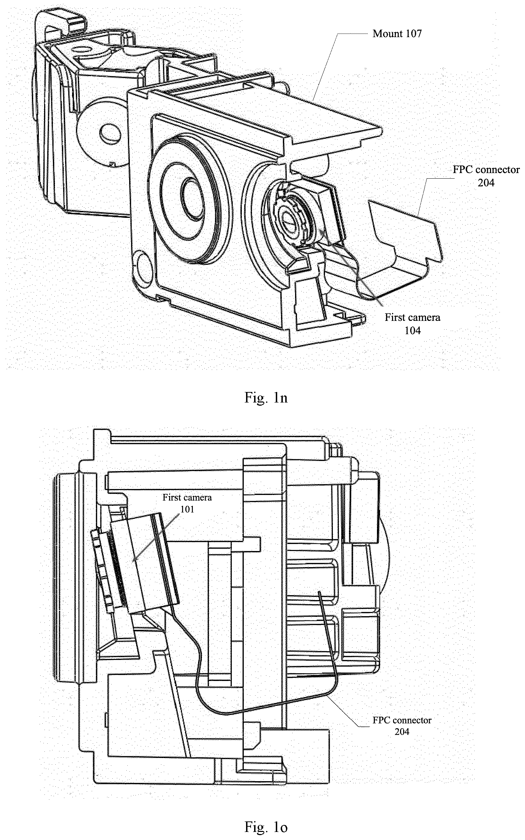

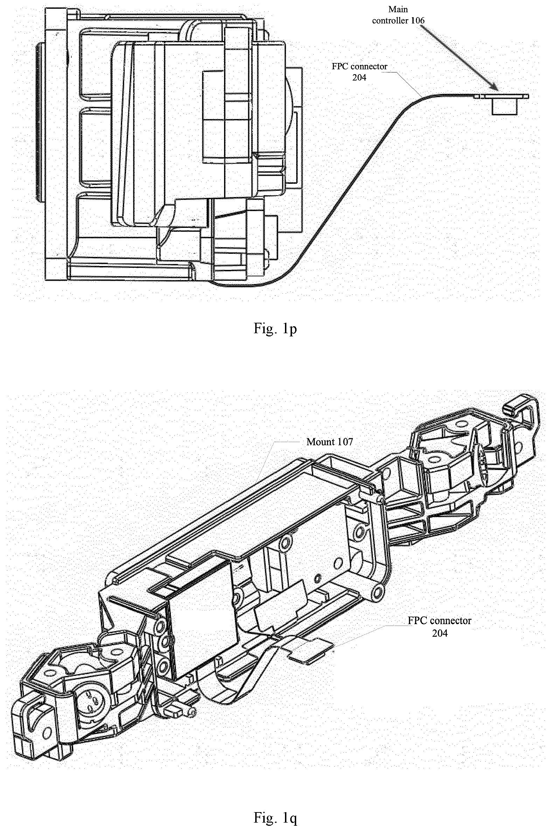

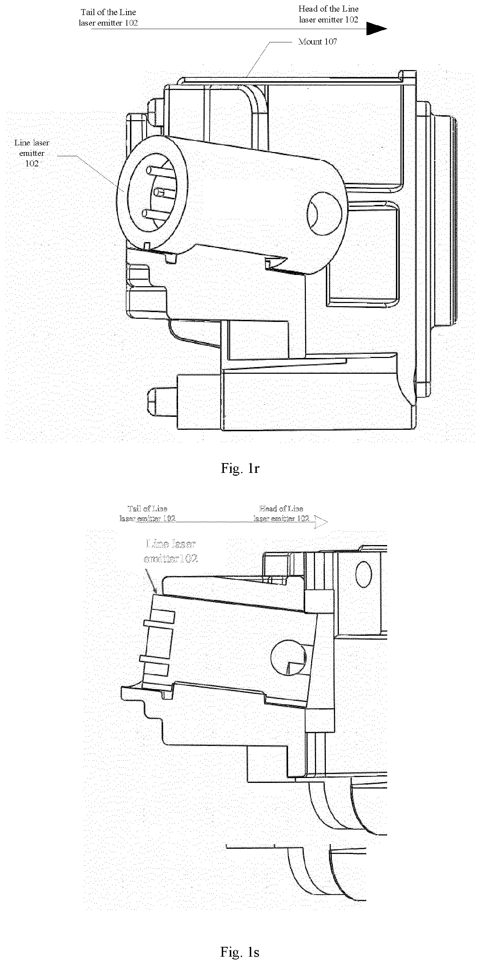

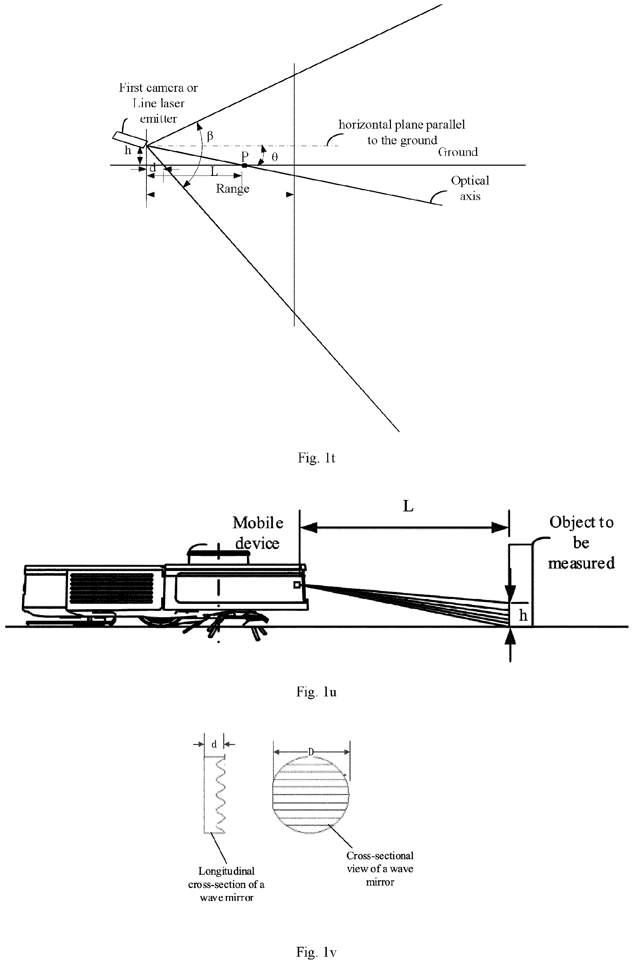

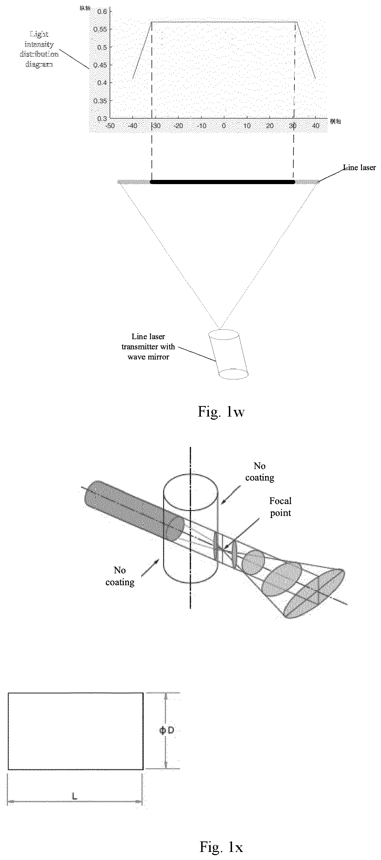

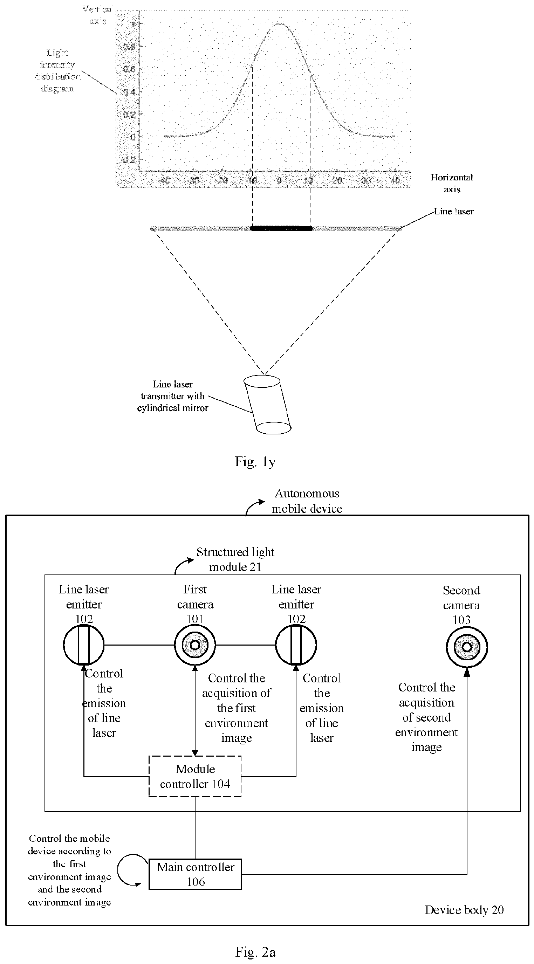

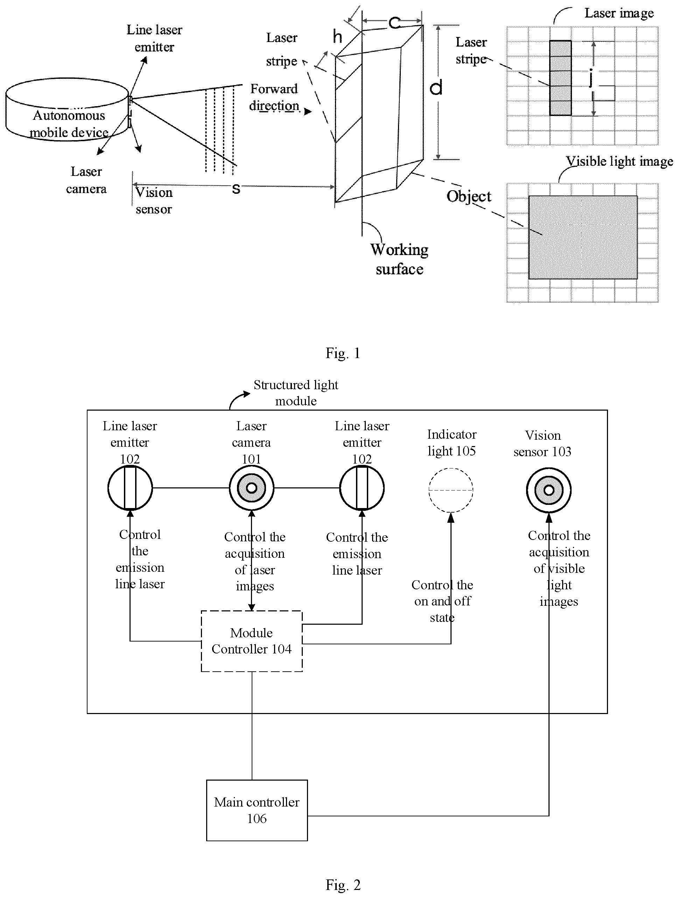

Fig. 1 is a schematic diagram of a scene where an autonomous mobile device uses a structured light module for operation, provided by an exemplary embodiment of this application.

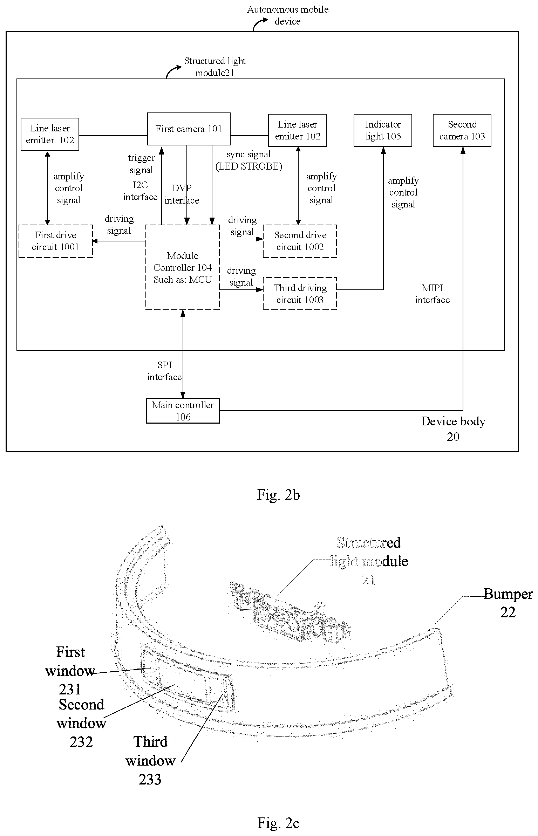

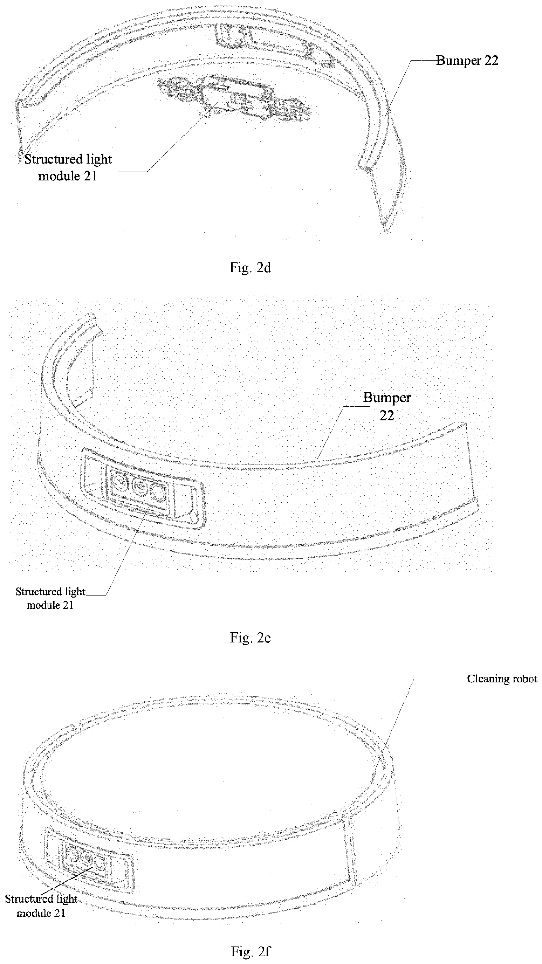

Fig. 2 is a schematic diagram of a structure of a structured light module provided by an exemplary embodiment of this application.

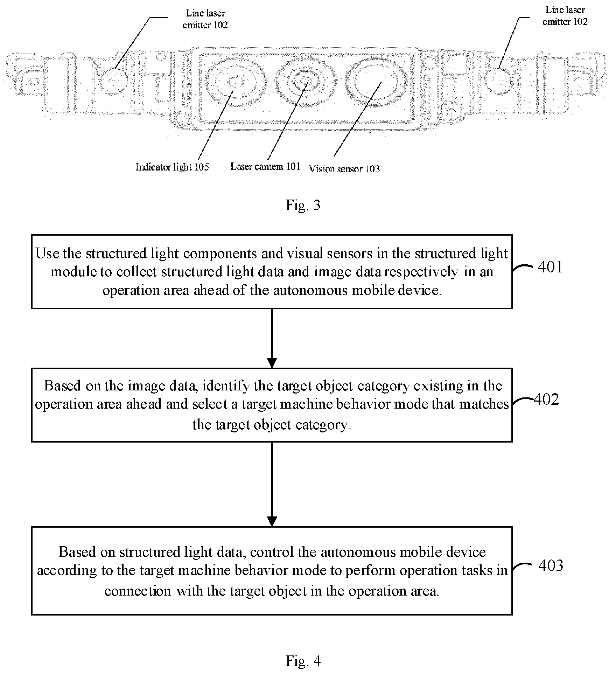

Fig. 3 is a schematic diagram of another structured light module provided by an exemplary embodiment of this application.
Fig. 4 is a flowchart of an operating method provided by an exemplary embodiment of this application.

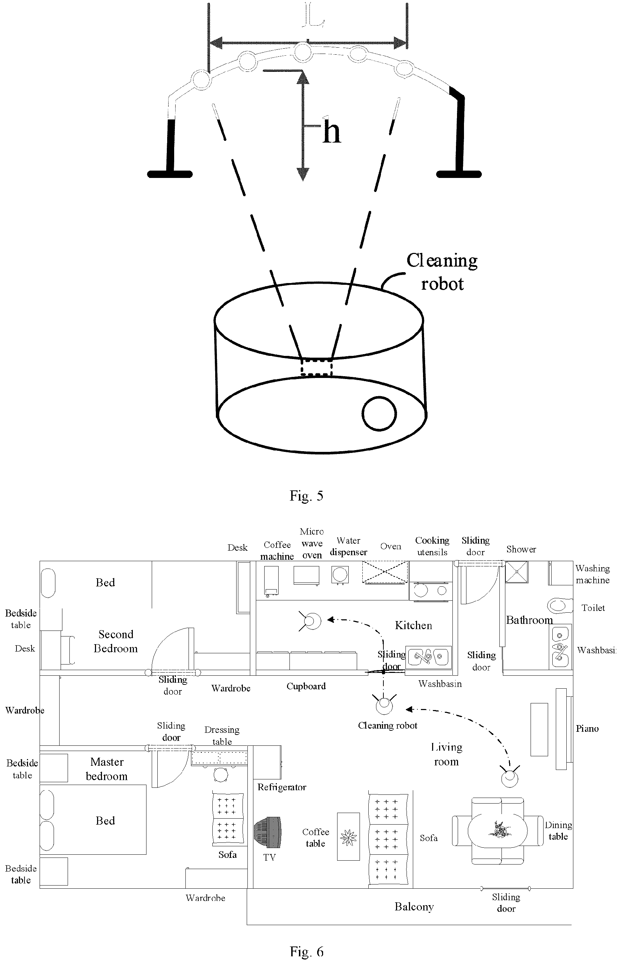

Fig. 5 is a schematic diagram of a scene where a sweeping robot is operating, provided by an exemplary embodiment of this application.
Fig. 6 is a floor plan of a home environment provided by an exemplary embodiment of this application.

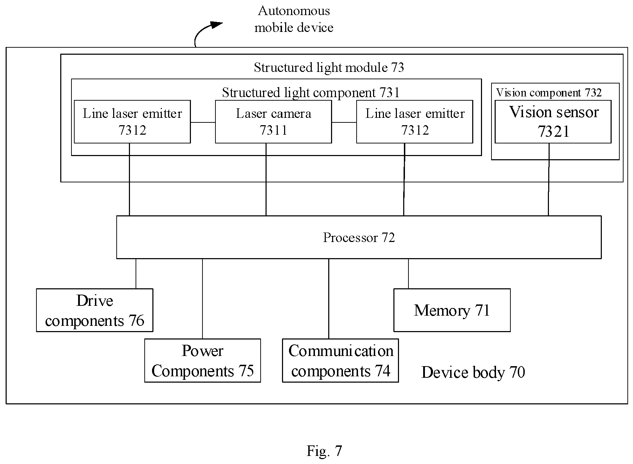

Fig. 7 is a schematic diagram of the structure of an autonomous mobile device provided by an exemplary embodiment of this application.

**Diagram Legends:**

| | | | | | |
|---|---|---|---|---|---|
| Structured Light Module: | 21 | First Camera: | 101 | Line Laser Emitter: | 102 |
| Second Camera: | 103 | Module Controller: | 104 | Indicator Light: | 105 |
| Main Controller: | 106 | Mount: | 107 | Fixed Cover: | 108 |
| Fixed Plate: | 109 | Indicator Light Board: | 201 | Mounting Hole: | 202 |
| Groove: | 203 | FPC Connector: | 204 | Device Body: | 20 |
| First Window: | 231 | Second Window: | 232 | Third Window: | 233 |
| First Drive Circuit: | 1001 | Second Drive Circuit: | 1002 | Third Drive Circuit: | 1003 |

### Detailed Description

To clarify the purpose, technical solution, and advantages of this application, the following is a clear and complete description of technical solutions of this application in conjunction with specific embodiments and corresponding drawings. It should be noted that the embodiments described here are only a part of the embodiments of this application, not all of them. All other embodiments obtained by those skilled in the art without creative efforts based on the embodiments in this application fall within the scope of protection of this application.

Addressing the issue that existing laser sensors cannot meet application requirements, one embodiment of the application provides a structured light module. The module can cooperatively use a first camera and a line laser emitter to collect a first environmental image, which includes laser stripes formed when the line laser encounters an object. It can also collect a second environmental image with visible light that does not contain laser stripes. Both the first and second environmental images help to detect more accurate and richer environmental information, thus expanding the application range of laser sensors.

It should be understood that the structured light module, by detecting more abundant environmental information, can help improve the accuracy of object recognition. For instance, if the structured light module is applied in an obstacle avoidance scenario, it can increase the success rate of avoidance. Similarly, if applied in a barrier-crossing scenario, it can enhance the success rate of crossing barriers. Furthermore, if used in creating environmental maps, it can improve the accuracy of environmental map creation.

Figure 1a is a schematic diagram of the structured light module provided by this exemplary embodiment. As shown in Figure 1a, the structured light module includes: a first camera 101, line laser emitters 102 distributed on both sides of the first camera 101, and a second camera 103.

In this embodiment, the form of the line laser emitter 102 is not limited and can be any device/product capable of emitting line lasers. For example, the line laser emitters 102 can include, but not limited to, laser tubes. In this embodiment, the line lasers can be controlled by a controller inside or outside the structured light module, such as controlling the line laser emitters 102 to emit line lasers externally. After encountering an object in the environment, the line laser emitted by the line laser emitter 102 forms laser stripes on the object. As shown in Figure 1b, the line laser emitter 102 emits laser planes FAB and ECD externally, which form a laser stripe on the surface of the obstacle, namely the line segments AB and CD shown in Figure 1b.

The form of the first camera (camera 101) should not be limited to the specific examples. Any visual device capable of capturing laser image detected by the line laser emitter (emitter 102) is suitable for this implementation. For example, camera 101 can include, but not limited to, laser cameras, 2D cameras equipped with filters that only allow line lasers to pass through, etc. Additionally, in the application, the wavelength of the line laser emitted by emitter 102 should not be limited to the specific examples. Different wavelengths will result in different colors of the line laser, such as red or purple lasers. Moreover, the line laser can be either visible or invisible light. Accordingly, camera 101 can adopt a camera capable of capturing the line laser emitted by emitter 102. Depending on the wavelength of the line laser emitted by emitter 102, camera 101 can also include infrared cameras, ultraviolet cameras, starlight cameras, high-definition cameras, 2D visual cameras equipped to transmit red lasers, 2D visual cameras equipped to transmit purple lasers, etc. Camera 101 can capture environmental images within its field of view, which includes vertical, horizontal, and diagonal field of view angles. In this embodiment, the field of view angle of camera 101 is not limited and can be selected according to application requirements. Optionally, the horizontal field of view angle of camera 101 can be 100.6°; or the vertical field of view angle can be 74.7°; or the diagonal field of view angle can be 133.7°.

In this embodiment, the line laser emitter (emitter 102) and the first camera (camera 101) can be considered as a structured light component capable of obtaining 3D information about objects in the environmental scene. Specifically, the line laser emitted by emitter 102 is within the field of view of camera 101, and the line laser can help detect 3D point cloud data, contours, shapes, heights, widths, depths, volumes, and other information of objects within the field of view of camera 101.

For ease of differentiation and understanding, the environmental image captured by camera 101, which is detected by the line laser, is referred to as the first environmental image. As long as the line laser emitted by emitter 102 is within the field of view of camera 101, the angle between the laser stripes formed on the object surface and the horizontal plane should not be limited to specific examples. For instance, it can be parallel or perpendicular to the horizontal plane, or at any angle to the horizontal plane, depending on application requirements. In this embodiment, camera 101 can be controlled by an internal or external controller of the structured light module. For example, the internal or external controller of the structured light module can control the exposure frequency, exposure duration, working frequency, etc., of camera 101. It should be understood that an external controller of the structured light module refers to a controller of an external device relative to the structured light module.

For the first camera (camera 101), under the control of a controller either inside or outside the structured light module, it can collect the first environmental image detected by the line laser during the emission period of the line laser emitter (emitter 102). Figure 1d illustrates the relationship between the line laser emitted by emitter 102 and the field of view angle of camera 101. In the figure, the letter K represents camera 101, and letters J and L represent the line laser emitters 102 located on both sides of camera 101. Q represents the intersection point of the line lasers emitted by the two side emitters 102 within the field of view of camera 101. The lines KP and KM represent the two boundaries of the horizontal field of view of camera 101, and LPKM represents the horizontal field of view angle of camera 101. In Figure 1d, the line JN represents the central line of the line laser emitted by emitter 102J; the line LQ represents the central line of the line laser emitted by emitter 102L.

Based on the first environmental image collected by camera 101, it is possible to calculate the distance (or the depth information) from the structured light module or the device containing the structured light module to the objects ahead (such as obstacles), as well as to calculate the 3D point cloud data, contours, shapes, heights, widths, volumes, etc., of the objects in the front. Further, 3D reconstruction can be performed. The principle of laser triangulation is used here, where the distance to the objects in front of camera 101 can be calculated using trigonometric functions.

The form of the second camera (camera 103) should not be limited to specific examples. Any visual device capable of capturing visible light images is suitable for this implementation. Visible light images can present the color features, texture features, shape features, and spatial relationship features of objects in the environment, which can help identify the type and material of objects. In this embodiment, the second environmental image captured by camera 103 within its field of view is a visible light image. Camera 103 can include, but not limited to, monocular RGB cameras, binocular RGB cameras, etc. A monocular RGB camera includes one RGB camera, and a binocular RGB camera includes two RGB cameras. An RGB camera is a 2D visual camera that can capture RGB images. Camera 101 can capture environmental images within its field of view. The field of view of camera 103 includes vertical, horizontal, and diagonal field of view angles. In this embodiment, the field of view angle of camera 103 is not limited and can be selected according to application requirements. Optionally, the horizontal field of view angle of camera 103 can be 148.3°; or the vertical field of view angle can be 125.8°; or the diagonal field of view angle can be 148.3°.

It should be understood that the filters in RGB cameras cannot penetrate the reflected light from the line lasers emitted by the line laser emitter (emitter 102) and reflected back by objects. Therefore, RGB cameras can capture visible light images that do not include laser stripes created when line lasers encounter objects. It is understood that the second environmental image captured by the second camera (camera 103) within its field of view is a visible light image that does not contain laser stripes.

In this embodiment, camera 103 can be controlled by a controller either inside or outside the structured light module. For example, the internal or external controller of the structured light module can control the exposure frequency, exposure duration, working frequency, etc., of camera 103.

Additionally, as an optional feature and referring to Figure 1c, the structured light module may also include an indicator light (indicator 105). The on/off status of indicator 105 indicates the working status of camera 103. For instance, if indicator 105 is on, it signifies that camera 103 is in working state. If indicator 105 is off, it indicates that camera 103 is in the off state. In this embodiment, the working status of indicator 105 can be controlled by a controller either inside or outside the structured light module, such as the internal or external controller of the structured light module, which may control the on/off status of indicator 105 based on the working status information of camera 103.

Moreover, camera 103 and indicator 105 can be considered as the visual sensor components within the structured light module.

In this embodiment of the application, the control of the line laser emitter (emitter 102), the first camera (camera 101), the indicator light (indicator 105), and the second camera (camera 103) can be executed by the same controller, or different controllers can be used for each component without any restriction.

In this implementation, a controller can be placed inside the structured light module, or the structured light module may not include an internal controller. For ease of understanding and differentiation, the controller inside the structured light module is referred to as the module controller (controller 104). As shown in Figures 1a and 1c, controller 104 within the dashed line box is an optional component of the structured light module.

The embodiments of this application do not limit the implementation form of controller 104. For example, it can be, but not limited to, a processor such as a CPU, GPU, or MCU. The application embodiment also does not restrict the method by which controller 104 controls the structured light module. Any implementation method capable of realizing the functions of the structured light module is applicable to this embodiment.

Furthermore, as an optional feature to enhance the intelligence of the structured light module, controller 104 can be set up inside the module. Controller 104 would then control the operation of emitter 102, camera 101, indicator 105, and camera 103, as well as undertake the task of processing the image data collected by cameras 101 and 103. This setup would allow for integrated control and data processing within the structured light module, potentially enhancing its efficiency and effectiveness in various applications, such as robot vacuum technology.

As an optional feature to reduce the data processing load and improve the image acquisition efficiency of the structured light module, the module can interact with the main controller (controller 106) of an autonomous mobile device for data exchange. Optionally, to enhance communication speed, the module controller (controller 104) within the structured light module may use a Serial Peripheral Interface (SPI) to communicate with controller 106. In most cases, the structured light module sends data to controller 106 via the SPI interface. Therefore, the structured light module can act as the master device in the SPI interface, while controller 106 acts as the slave device. If controller 106 needs to send data to the structured light module, it can notify the module by raising the voltage level of an additional IO pin, allowing the module to receive and parse data or commands from controller 106 during the next data transmission.

For example, the structured light module may only undertake image capture tasks, leaving most or all image data-related computing tasks to be handled by controller 106. In situations where the structured light module can interact with the main controller (controller 106) of an autonomous mobile device, the associated party of the autonomous mobile device can deploy appropriate Artificial Intelligence (AI) algorithms in controller 106 to process the visible light image data captured by the structured light module and obtain relevant AI recognition results. These AI algorithms may include, but are not limited to, algorithms for identifying types and materials of objects in the environment, algorithms for creating 3D stereoscopic maps, obstacle avoidance or crossing algorithms. Optionally, controller 106 is also used for recognizing 3D point cloud data, contours, shapes, heights, widths, volumes of objects in the environment, and identifying color features, texture features, shape features, and spatial relationship features of objects.

Further optionally, as shown in Figure 1c, besides connecting to emitter 102, camera 101, and indicator 105, controller 104, when applied in an autonomous mobile device, can also be electrically connected to the main controller (controller 106) of the autonomous mobile device. Additionally, to further reduce the data processing load of the structured light module, camera 103 of the module can also be electrically connected to controller 106.

When the structured light module and controller 106 use the above interaction scheme, controller 104 controls the exposure of camera 101 and the emission of line lasers by emitter 102 during the exposure period for camera 101 to capture the first environmental image detected by the line laser. Controller 106 controls the exposure of camera 103 for capturing the second environmental image. Moreover, controller 106 sends the working status information of camera 103 to controller 104; controller 104, in turn, controls the on/off status of indicator 105 based on the working status information of camera 103.

The following is a brief explanation of the calculation process for the downward tilt angle of the optical axis of the first camera and the line laser emitter (referred to as the inclination angle relative to a horizontal plane parallel to the ground), in conjunction with Figure 1t.

### Calculation Process for the Downward Tilt Angle of the First Camera's Optical Axis:

### Assumptions:

The downward tilt angle of the first camera's optical axis is denoted as θ.

The vertical field of view angle of the first camera is denoted as β.

The installation height of the first camera is h.

The blind area distance for measurement of the first camera is d.

The range (detection distance) of the structured light module is Range.

The vertical distance from the intersection point P of the first camera's optical axis with the ground to the installation position of the first camera (the distance from the intersection point P of the first camera's optical axis with the ground to the first camera itself) is L.

In the design of the structured light module, L is typically set to half of the module's range, or in an area close to half of the module's range. This arrangement aligns the image center (the image area near the optical axis) with the central area of range detection, thereby improving measurement accuracy. Thus, it can be approximated that L ≈ Range/2.

Based on the installation height h of the first camera and the distance L from the intersection point P of the first camera's optical axis with the ground to the camera, the downward tilt angle θ of the first camera's optical axis can be calculated as θ = arctan(h/L).

Once the downward tilt angle θ of the first camera's optical axis is determined, the blind area distance d for measurement of the first camera can be calculated as d = h * arcctg(θ + β/2).

The calculation process for determining the downward tilt angle of the optical axis of the line laser emitter is as follows:
Assumptions:
The downward tilt angle of the Emitter's optical axis is denoted as θ.

The divergence angle of the Emitter's light output is denoted as β.

The installation height of the Emitter is denoted as h.

The ground spot starting distance (also known as the blind area distance) of the Emitter is denoted as d.

The range (detection distance) of the structured light module is denoted as Range.

The vertical distance from the intersection point P of the Emitter's optical axis with the ground to the Emitter's installation position (the distance from the ground intersection point P of the Emitter's optical axis to the Emitter itself) is denoted as L.

In the design of the structured light module, L is typically set to 3/4 of the module's range, or in an area close to 3/4 of the module's range. This arrangement ensures that the strongest part of the laser light emitted by the Emitter illuminates the distant end area within the range, thereby enhancing the structured light module's ability to detect ground objects. Thus, it can be approximated that L ≈ Range * 3/4.

Based on the installation height h of the Emitter and the vertical distance L from the intersection point P of the Emitter's optical axis with the ground to the Emitter, the downward tilt angle θ of the Emitter's optical axis can be calculated as θ = arctan(h/L).

Once the downward tilt angle θ of the Emitter's optical axis is determined, the ground spot starting distance d for the Emitter can be calculated as d = h * arcctg(θ + β/2).

In this embodiment of the application, the tilt angles of the optical axes of the first camera (camera 101) and the line laser emitter (emitter 102) relative to a horizontal plane parallel to the ground are not specifically defined. As an optional feature, tilting the optical axis of emitter 102 downward at a certain angle relative to the horizontal plane can direct high-energy line lasers into the core image capture area of camera 101, which is advantageous for increasing the detection distance of the structured light module. Additionally, tilting the optical axis of camera 101 downward at a certain angle relative to the horizontal plane can align areas with minimal visual distortion and high illumination with the camera's primary image sensing zone. This alignment is beneficial for enhancing both the detection distance and measurement accuracy of the structured light module. As indicated in Figures 1n, 1o, and 1t, the optical axis of the first camera (camera 101) is tilted at a certain angle relative to a horizontal plane that is parallel to the ground. Additionally, as shown in Figures 1r, 1s, and 1t, the optical axis of the line laser emitter (emitter 102) is also inclined downward at a specific angle relative to the horizontal plane.

Optionally, the optical axis of the first camera 101 is inclined downward at a first angle relative to the horizontal plane parallel to the ground, and the optical axis of the line laser emitter 102 is inclined downward at a second angle relative to the horizontal plane parallel to the ground, with the second angle being smaller than the first angle. Optionally, the angle range of the first angle is [0, 40] degrees, and more optionally, the angle range of the first angle is [11, 12] degrees; correspondingly, the angle range of the second angle is [5, 10] degrees, and more optionally, the angle range of the second angle is [7.4, 8.4] degrees. Preferably, to effectively enhance the detection distance of the structured light module, the first angle is 11.5 degrees, and the second angle is 7.9 degrees.

Furthermore, this embodiment does not limit the emission angle of the line laser emitter. Optionally, the angle range of the emission angle of the line laser emitter is [70, 80] degrees, and preferably, the emission angle of the line laser emitter is 75 degrees.

Table 1 shows the test data of the first camera under different test scenarios. In Table 1, the inclination of the optical axis of the first camera refers to the optical axis of the first camera being inclined downward at a certain angle relative to the horizontal plane parallel to the ground, and the non-inclination of the optical axis of the first camera refers to the optical axis of the first camera being parallel to the horizontal plane parallel to the ground. For the scenario where the optical axis of the first camera is not inclined, Table 1 respectively presents the detection distances when the line laser sensor on the left side of the first camera emits a line laser in different test scenarios, and the detection distances when the line laser sensor on the right side of the first camera emits a line laser in different test scenarios. For the scenario where the optical axis of the first camera is inclined, Table 1 respectively presents the detection distances when the line laser sensor on the left side of the first camera emits a line laser in different test scenarios, and the detection distances when the line laser sensor on the right side of the first camera emits a line laser in different test scenarios. According to Table 1, it can be known that the inclination of the optical axis of the first camera, relative to the non-inclination of the optical axis of the first camera, can effectively enhance the detection distance of the structured light module.

**Table 1**

| Test Scenario | The optical axis of the first camera is not tilted | | The optical axis of the first camera is tilted | | Percentage Increase in Detection Distance | |
|---|---|---|---|---|---|---|
| | Left laser | Right laser | Left laser | Right laser | Left laser | Right laser |
| Office floor detection distance (mm) | 370 | 403 | 644 | 509 | 74.05% | 26.30% |
| Black ground detection distance (mm | 121 | 101 | 331 | 353 | 173.55% | 249.50% |
| Detection distance on the upper surface of steps (black tiles) (mm) | 170 | 215 | 263 | 260 | 54.71% | 20.93% |
| Detection distance on the upper surface of steps (wooden floor) (mm) | 289 | 292 | 390 | 446 | 34.95% | 52.74% |
| Detection distance on the upper surface of steps (highly reflective tiles) (mm) | 270 | 286 | 360 | 356 | 33.33% | 24.48% |

For ease of understanding, the comparison of ranging data between the case where the optical axis of the first camera is parallel to the ground (i.e., the optical axis of the first camera is not inclined) and the case where the optical axis of the first camera is inclined downward (i.e., the optical axis of the first camera is inclined) is also made in conjunction with Figure 1u and Table 2. Referring to Figure 1u, assume that the distance from the measured object to the first camera in the structured light module is denoted as L, and the height of the measurement point on the measured object (i.e., the measured position point) from the ground is denoted as h. Then, the data in the following Table 2 shows that compared to the scheme where the optical axis of the first camera is parallel to the ground, the scheme where the optical axis of the first camera is inclined downward has a significantly improved distance error and higher measurement accuracy. In Figure 1u, the measurement of the height of objects located above the ground by an autonomous mobile device is illustrated as an example, where the measured height h of objects located above the ground plane is generally positive. However, in actual measurements, the height of objects below the ground level is also measured, hence Table 2 includes negative values for the height h.

**Table 2**

| **The optical axis of the first camera is parallel to the ground** | | |
|---|---|---|
| **Distance L (mm)** | **Height h (mm)** | **Distance error(mm)** |
| 198.9364 | -1.3113 | -1.0636 |
| 198.8196 | -0.5395 | -1.1804 |
| 198.7266 | 0.2265 | -1.2734 |
| 198.6313 | 0.9918 | -1.3687 |
| | | |

| **The optical axis of the first camera is tilted downward** | | |
|---|---|---|
| **Distance L (mm)** | **Height h (mm)** | **Distance error(mm)** |
| 199.648 | -1.07 | -0.352 |
| 200.165 | -0.5082 | 0.165 |
| 199.525 | 0.3179 | -0.475 |
| 200.262 | 0.8329 | 0.262 |

The inclination angle of the optical axis of the second camera 103 relative to the horizontal plane parallel to the ground should not be limited to specific examples. Optionally, the optical axis of the second camera 103 is parallel to the horizontal plane parallel to the ground, i.e., the optical axis of the second camera 103 is inclined downward at 0° relative to the horizontal plane parallel to the ground.

The optical shaping lens of the line laser emitter 102 should not be limited to specific examples. For example, the optical shaping lens of the line laser emitter 102 can be a wave lens or a cylindrical lens. Figure 1v shows a type of wave lens. The cross-sectional shape of the wave lens shown in Figure 1v is circular, but this does not imply that the cross-sectional shape of the wave lens is limited to circular; it can also be elliptical, square, etc. The thickness d and diameter D of the wave lens are selected according to actual application requirements. Optionally, the error range for thickness d is [-0.1, 0.1] millimeters, and the error range for diameter D is [-0.05, 0.05] millimeters. Optionally, the thickness d is 2.10 millimeters, and the diameter is 8 millimeters.

Figure 1x illustrates a type of cylindrical lens, with the outer diameter ΦD and length L of the cylindrical lens selected according to actual application requirements. Optionally, the error range for the outer diameter ΦD is [0, 0.05] millimeters, and the error range for length L is [-0.1, 0.1] millimeters.

Figure 1w shows the light intensity distribution of the line laser emitted by the line laser emitter 102 equipped with a wave lens, and Figure 1y shows the light intensity distribution of the line laser emitted by the line laser emitter 102 equipped with a cylindrical lens. In Figures 1w and 1y, each ordinate on the vertical axis represents normalized light intensity, and each abscissa on the horizontal axis represents the angle of each line laser emitted by the line laser emitter 102 relative to the optical axis, with 0 degrees indicating the direction of the optical axis.

From Figures 1w and 1y, it can be seen that the light intensity is strongest at the optical axis of the cylindrical lens and weakens gradually as the distance from the optical axis increases, i.e., there is a significant difference in light intensity between the optical axis of the cylindrical lens and its sides, with areas closer to the optical axis having stronger light intensity (the black line segment in Figure 1y corresponds to a stronger light intensity of the line laser), and areas farther from the optical axis having weaker light intensity (the gray line segment in Figure 1y corresponds to a weaker light intensity of the line laser). The difference in light intensity between the optical axis of the wave lens and its sides is small, with areas around the optical axis having stronger light intensity (the black line segment in Figure 1w corresponds to a stronger light intensity of the line laser), and areas farther from the optical axis having weaker light intensity (the gray line segment in Figure 1w corresponds to a weaker light intensity of the line laser). Reflected on Figure 1t, the strongest light intensity of the line laser emitted by the line laser emitter falls within the area around the intersection point P on the horizontal plane parallel to the ground. Accordingly, the light intensity of the line laser in other areas outside the vicinity of the intersection point P is weaker.

In some optional embodiments of this application, when the line laser emitter 102 uses a wave lens, the light intensity of the line laser emitted by the line laser emitter 102 is strongest within an angular range of [-30, 30] degrees relative to the optical axis. When the line laser emitter 102 uses a cylindrical lens, the light intensity of the line laser emitted by the line laser emitter 102 is strongest within an angular range of [-10, 10] degrees relative to the optical axis.

Based on the above, in some optional embodiments, the line laser emitter 102 can use a cylindrical lens while inclining the optical axis downward, to further ensure that the line laser with the highest light intensity illuminates the key areas that the structured light module needs to detect, enhancing the image brightness of key areas, thereby further increasing the detection distance of the structured light module.

In the application, the total number of line laser emitters 102 should not be limited to specific examples. For example, there could be two or more. The number of line laser emitters 102 distributed on each side of the first camera 101 is also not limited; there can be one or more line laser emitters 102 on each side of the first camera 101. Additionally, the number of line laser emitters 102 on both sides can be the same or different. In Figure 1a, the example shown has one line laser emitter 102 on each side of the first camera 101, but this is not a limitation. For instance, two line laser emitters 102 can be placed on the left side of the first camera 101, and one line laser emitter 102 can be placed on the right side. Or, two, three, or five line laser emitters 102 could be placed on both sides of the first camera 101, respectively.

In the application, the distribution pattern of line laser emitters 102 on both sides of the first camera 101 should not be limited to specific examples; it can be uniform or non-uniform, symmetrical or asymmetrical. Uniform and non-uniform distribution refers to whether the line laser emitters 102 on the same side of the first camera 101 are distributed evenly or unevenly, which can also be understood as whether the line laser emitters 102 on both sides of the first camera 101 are distributed evenly or unevenly from an overall perspective. Symmetrical and asymmetrical distribution primarily refers to whether the line laser emitters 102 on both sides of the first camera 101 are distributed symmetrically or asymmetrically from an overall perspective. This symmetry includes both the quantity and the installation positions. For example, in the structured light module shown in Figure 1a, there are two line laser emitters 102 symmetrically distributed on both sides of the first camera 101.

In this embodiment, the installation positional relationship between the line laser emitters 102 and the first camera 101 is not limited; any installation positional relationship where the line laser emitters 102 are distributed on both sides of the first camera 101 applies to this embodiment. The installation positional relationship between the line laser emitters 102 and the first camera 101 is related to the application scenario of the structured light module. The installation positional relationship can be flexibly determined according to the application scenario of the structured light module. The installation positional relationship includes the following aspects:

Installation height: the line laser emitters 102 and the first camera 101 can be at different heights. For example, the line laser emitters 102 on both sides could be higher than the first camera 101, or the first camera 101 could be higher than the line laser emitters 102 on both sides; or the line laser emitter 102 on one side could be higher than the first camera 101, and the line laser emitter 102 on the other side could be lower than the first camera 101. Of course, the line laser emitters 102 and the first camera 101 can also be at the same height. More preferably, the line laser emitters 102 and the first camera 101 can be at the same height. For example, in practical use, the structured light module will be installed on a device (such as a robot, purifier, unmanned vehicle, or other autonomous mobile device), in which case, the distance from the line laser emitters 102 and the first camera 101 to the working surface of the device (such as the ground) is the same, for example, both are 47mm, 50mm, 10cm, 30cm, or 50cm away from the working surface.

Installation distance: the installation distance refers to the mechanical distance (or baseline distance) between the line laser emitter 102 and the first camera 101. The mechanical distance between the line laser emitter 102 and the first camera 101 can be flexibly set according to the application requirements of the structured light module. Among them, the mechanical distance between the line laser emitter 102 and the first camera 101, the detection distance that the device hosting the structured light module (e.g., a robot) needs to meet, and the diameter of the device can to some extent determine the size of the measurement blind zone. For the device hosting the structured light module (e.g., a robot), its diameter is fixed, but the measurement range and the mechanical distance between the line laser emitter 102 and the first camera 101 can be flexibly set according to requirements, meaning that the mechanical distance and the blind zone range are not fixed values. While ensuring the measurement range (or performance) of the device, the blind zone range should be minimized as much as possible. However, the larger the mechanical distance between the line laser emitter 102 and the first camera 101, the greater the controllable distance range, which is beneficial for better control of the size of the blind zone.

In the embodiments of the application, regarding installation positions, the laser emitter, indicator light 105, first camera 101, and second camera 103 can be at the same height or at different heights.

In some embodiments, the second camera 103 or indicator light 105 can be located to the left, right, top, or bottom of the first camera 101. Optionally, the second camera 103 can be located 17mm (millimeters) to the right of the first camera 101. Further optionally, the indicator light 105 and the second camera 103 are symmetrically positioned on both sides of the first camera 101.

In some application scenarios, the structured light module is applied to a robotic vacuum cleaner. For example, it can be installed on the bumper or body of the robotic vacuum. For the robotic vacuum, a reasonably suggested range for the mechanical distance between the line laser emitter 102 and the first camera 101 is provided below. For instance, the mechanical distance between the line laser emitter 102 and the first camera 101 can be more than 20mm. Further optionally, the mechanical distance between the line laser emitter 102 and the first camera 101 is more than 30mm. Even further, the mechanical distance between the line laser emitter 102 and the first camera 101 is more than 41mm. It should be noted that the range of mechanical distances provided here is not only applicable to the scenario of structured light modules used in robotic vacuums but also applies to the application of structured light modules on other devices with dimensions and specifications similar or close to those of robotic vacuums.

Emission angle: the emission angle refers to the angle between the central line of the line laser emitted by the line laser emitter 102 and the installation baseline of the line laser emitter 102 after installation. The installation baseline refers to a straight line where the line laser emitter 102 and the first camera 101 are located at the same installation height. In the application, the emission angle of the line laser emitter 102 should not be limited to specific examples. The emission angle is related to the detection distance required by the device hosting the structured light module (e.g., a robot), the radius of the device, and the mechanical distance between the line laser emitter 102 and the first camera 101. With the detection distance required by the device, the device's radius, and the mechanical distance between the line laser emitter 102 and the first camera 101 being determined, the emission angle of the line laser emitter 102 can be directly obtained through the trigonometric function relationship, meaning the emission angle is a fixed value.

Certainly, if a specific emission angle is required, it can be achieved by adjusting the detection distance that the device hosting the structured light module (e.g., a robot) needs to meet and the mechanical distance between the line laser emitter 102 and the first camera 101. In some application scenarios, with the detection distance that the device hosting the structured light module needs to meet and the radius of the device being determined, the emission angle of the line laser emitter 102 can vary within a certain range by adjusting the mechanical distance between the line laser emitter 102 and the first camera 101, for example, it can be 50-60 degrees, but not limited to this. Preferably, the emission angle of the line laser emitter 102 is 55.26 degrees.

Combined with Figure 1e, taking the application of the structured light module on a robotic vacuum as an example, an illustrative depiction of the various installation positional relationships and related parameters is provided. In Figure 1d, the letter B represents the first camera 101, and letters A and C represent the line laser emitters 102 located on both sides of the first camera 101; H represents the intersection point of the line lasers emitted by the line laser emitters 102 on both sides within the field of view of the first camera 101; straight lines BD and BE represent the two boundaries of the horizontal field of view of the first camera 101, and ∠DBE represents the horizontal field of view angle of the first camera 101. In Figure 1c, straight line AG represents the central line of the line laser emitted by the line laser emitter 102A; straight line CF represents the central line of the line laser emitted by the line laser emitter 102C. Additionally, in Figure 1e, straight line BH represents the central line of the field of view angle of the first camera 101, meaning, in Figure 1e, the central lines of the line lasers emitted by the line laser emitters 102 on both sides intersect with the central line of the field of view angle of the first camera 101.

In Figure 1e, the radius of the robotic vacuum is 175mm, and its diameter is 350mm; line laser emitters 102A and C are symmetrically distributed on both sides of the first camera 101B, with a mechanical distance of 30mm between line laser emitter 102A or C and the first camera 101B; the horizontal field of view angle ∠DBE of the first camera 101B is 67.4 degrees; with the robotic vacuum's detection distance at 308mm, the emission angle of line laser emitters 102A or C is 56.3 degrees. As shown in Figure 1e, the distance from the line passing through point H, IH, to the installation baseline (i.e., the structured light module baseline) is 45mm, and the distance from line IH to the tangent to the edge of the robotic vacuum is 35mm, identifying this region as the field of view blind zone. The values shown in Figure 1e are for illustrative purposes only and are not limiting.

The embodiments do not restrict the angle between the optical axis of the line laser emitter and the structured light module baseline. For clarity, the calculation process for the angle between the optical axis of the line laser emitter and the structured light module baseline is further explained with reference to Figure 1e. Assuming the length of the structured light module baseline (i.e., the mechanical distance between the line laser emitter and the first camera) is denoted as l; the angle between the optical axis of the line laser emitter and the structured light module baseline is denoted as α; the vertical distance from the intersection point between the optical axis of the line laser emitter and the tangent to the edge of the autonomous mobile device to the baseline is denoted as L. The vertical distance from the center of the first camera to the tangent to the edge of the autonomous mobile device is denoted as d; the diameter of the outer contour of the autonomous mobile device is denoted as ΦD; the range of the structured light module (i.e., the detection distance) is denoted as Range;

The vertical distance L from the intersection of the optical axis of the line laser emitter with the tangent to the edge of the autonomous mobile device to the baseline is usually set to a value close to the outer diameter of the autonomous mobile device (setting it too large will cause low obstacle detection accuracy at this position, and setting it too small will result in a short effective detection distance of the structured light module). Thus, we have: L ≈ ΦD. Once L is determined, the angle α between the optical axis of the line laser emitter and the baseline of the structured light module can be obtained as α = arctan(L/(d+l)). Optionally, the angle between the optical axis of the line laser emitter and the baseline of the structured light module ranges from [50, 60] degrees. Furthermore, optionally, the angle between the optical axis of the line laser emitter and the baseline of the structured light module is 55.26 degrees.

In some embodiments of this application, as shown in Figure 1f, the structured light module also includes a driving circuit. The module controller 104 can be electrically connected to the line laser emitter 102 via the driving circuit, or, the module controller 104 can be electrically connected to the indicator light 105 via the driving circuit. The driving circuit can amplify the control signal from the module controller 104 to the line laser emitter 102, or it can amplify the control signal from the module controller 104 to the indicator light 105. In the embodiments of this application, the electrical structure of the driving circuit is not limited, any circuit structure that can amplify signals and provide the amplified signals to the line laser emitter 102 or the indicator light 105 is applicable.

In the embodiments of this application, the number of driving circuits is not limited. Different line laser emitters 102 can share one driving circuit, or there can be one driving circuit 100 per line laser emitter 102. More preferably, there is one driving circuit per line laser emitter 102. In Figure 1f, for the sake of illustration, one line laser emitter 102 corresponds to a first driving circuit 1001, another line laser emitter 102 corresponds to a second driving circuit 1002, and an indicator light 105 corresponds to a third driving circuit 1003.

For ease of use, the structured light module provided in the embodiments of this application includes, in addition to the first camera 101, line laser emitters 102 distributed on both sides of the first camera 101, indicator light 105, and the second camera 103, also includes various structures for carrying the first camera 101, line laser emitters 102 distributed on both sides of the first camera 101, indicator light 105, and the second camera 103. The carrying structure can have multiple implementations, which are not limited herein.

In some optional embodiments, the carrying structure includes a mount 107, and further may include a fixed cover 108 used in conjunction with the mount 107. The structure of the structured light module with mount 107 and fixed cover 108 is described in conjunction with Figures 1h to 1r. Figures 1h to 1r are respectively the front view, axial side view, and exploded view of the structured light module. Due to the perspective, not all components are shown in each view, thus only part of the components are labeled in Figures 1h to 1r. As shown in Figures 1h to 1r, the structured light module also includes: the mount 107; the laser emitter, indicator light 105, first camera 101, and second camera 103 are assembled on the mount 107.

It should be noted that assembling the laser emitter, indicator light 105, first camera 101, and second camera 103 on the same mount 107 can improve the system stability of the structured light module and reduce the impact of system parameter changes due to structural creep when assembled separately.

Further optionally, as shown in Figures 1h to 1r, the mount 107 includes: a main body and ends located on both sides of the main body; wherein, the indicator light 105, first camera 101, and second camera 103 are assembled on the main body, and the line laser emitter 102 is assembled on the ends; wherein, the end face of the ends faces the reference surface, so that the centerline of the line laser emitter 102 intersects with the centerline of the first camera 101 at one point; the reference surface is a plane perpendicular to the end face of the main body or a tangent plane of the end face.

In an optional embodiment, for ease of fixation and to reduce the impact of the components on the appearance of the structured light module, as shown in Figures 1h to 1r, three grooves 203 are provided in the middle position of the main body, and the indicator light 105, first camera 101, and second camera 103 are installed in the corresponding grooves 203; mounting holes 202 are provided on the ends, and the line laser emitter 102 is installed in the mounting holes 202.

Further optionally, as shown in Figures 1h to 1r, when the structured light module includes a module controller 104, the module controller 104 can be fixedly located at the rear of the mount 107.

Further optionally, as shown in Figures 1h to 1r, the structured light module also includes a fixed cover 108 assembled above the mount 107; a cavity is formed between the fixed cover 108 and the mount 107 to accommodate the connection wires between the line laser emitter 102, the first camera 101, and the module controller 104, as well as to accommodate the connection wires between the module controller 104 and the second camera 103 and the main controller 106. Optionally, the second camera 103 in the structured light module can be connected to the main controller 106 via an FPC (Flexible Printed Circuit) connector.

The fixed cover 108, module controller 104, and mount 107 can be fixed together using fasteners, which include but are not limited to screws, bolts, and clasps.

In an optional embodiment, as shown in Figures 1h to 1r, the structured light module also includes a fixed plate 109 assembled on the line laser emitter 102, or an indicator light board 201 assembled on the indicator light 105. The fixed plate 109 or indicator light board 201 can be any shape of plate-like structure.

In an optional embodiment, the first camera 101 is located within the outer edge of groove 203, meaning the lens is recessed within groove 203. This configuration prevents the lens from being scratched or bumped, thus protecting the lens.

In this application, the shape of the main body's end face should not be limited to specific examples; it can be flat or a concave or convex curved surface, for example. The shape of the main body's end face varies depending on the structured light module's device. For instance, if the structured light module is applied to an autonomous mobile device with a circular or elliptical outline, then the end face of the main body can be a concave curved surface that fits the outline of the autonomous mobile device. If the structured light module is applied to an autonomous mobile device with a square or rectangular outline, then the end face of the main body can be flat, fitting the outline of the autonomous mobile device. Circular or elliptical autonomous mobile devices could include circular or elliptical robotic vacuum cleaners, window-cleaning robots, etc. Similarly, square or rectangular autonomous mobile devices could include square or rectangular robotic vacuum cleaners, window-cleaning robots, etc.

In an optional embodiment, for autonomous mobile devices with circular or elliptical outlines, the structured light module is installed on the autonomous mobile device. To better match the appearance of the autonomous mobile device and maximize the use of space, the radius of the main body's curved surface is the same or approximately the same as the radius of the autonomous mobile device. For example, if an autonomous mobile device with a circular outline has a radius range of 170mm, then the radius of the curved surface of the main body of the structured light module applied to this device could be 170mm or approximately 170mm, such as within the range of 170mm-172mm, but not limited to this range.

Furthermore, in applications where the structured light module is used on autonomous mobile devices with circular or elliptical outlines, the emission angle of the line laser emitter 102 in the structured light module is primarily determined by the detection distance required by the autonomous mobile device and the radius of the device. In this scenario, the end face of the main body of the structured light module or a tangent to the end face is parallel to the installation baseline, so the emission angle of the line laser emitter 102 can also be defined as the angle between the centerline of the line laser emitted by the line laser emitter 102 and the end face of the main body or a tangent to the end face. In some application scenarios, given the detection distance and radius of the autonomous mobile device, the range of the emission angle of the line laser emitter 102 can be set to 50-60 degrees, but is not limited to this range. As shown in Figures 1h to 1r, there are two line laser emitters 102, symmetrically distributed on both sides of the first camera 101. The detection distance required by the autonomous mobile device refers to the range of distance within which it needs to detect environmental information, primarily the area in front of the device over a certain distance.

The structured light modules provided in the above embodiments of this application are stable in structure, compact in size, fit the overall appearance of the device, and significantly save space.

They can support various types of autonomous mobile devices.

Based on the structured light module described above, this application's embodiments also provide a schematic diagram of an autonomous mobile device structure, as shown in Figure 2a. The device includes a device body 20, on which a main controller 106 and a structured light module 21 are set. The main controller 106 is electrically connected to the structured light module 21.

In an optional embodiment, the structured light module 21 includes a first camera 101, line laser emitters 102 distributed on both sides of the first camera 101, and a second camera 103.

Further optionally, the structured light module 21 also includes a module controller 104, which is electrically connected to the main controller 106. The module controller 104 controls the line laser emitters 102 to emit laser lines and controls the first camera 101 to capture a first environmental image detected by the laser lines during emission, and then sends the first environmental image to the main controller 106. The main controller 106 controls the second camera 103 to capture a second environmental image within its field of view and performs functional control of the autonomous mobile device based on both the first and second environmental images, where the first environmental image includes laser stripes generated when the laser lines encounter objects, and the second environmental image is a visible light image that does not contain laser stripes.

Furthermore, optionally, when the second camera 103 in the structured light module 21 is connected to the main controller 106 through an FPC connector 204, the area around the FPC connector 204 can undergo clearance processing, which means no other objects are placed in the area of the FPC connector 204. This clearance can reduce the likelihood of the FPC being damaged by collisions with other objects when the autonomous mobile device's bumper 22 moves.

In these embodiments, the autonomous mobile device can be any mechanical device capable of moving autonomously within its environment, such as robots, purifiers, drones, etc. Robots may include robotic vacuum cleaners, window-cleaning robots, companion robots, welcoming robots, and more.

Of course, the shape of the autonomous mobile device may vary according to its implementation form. This embodiment does not limit the implementation form of the autonomous mobile device. For example, the outline shape of the autonomous mobile device can be irregular or regular shapes such as circular, elliptical, square, triangular, teardrop, or D-shaped. Shapes outside of these regular shapes are considered irregular, such as the outlines of humanoid robots, unmanned vehicles, and drones.

In these embodiments, the implementation form of the main controller 106 is not limited and may include, but not limited to, processors such as CPUs, GPUs, or MCUs. The specific method by which the main controller 106 controls the functions of the autonomous mobile device based on environmental images is not limited. For example, the main controller 106 can control various environment-aware functions based on the first environmental image and second environmental map, such as object recognition, tracking, and classification through visual algorithms. Additionally, leveraging the high detection accuracy of line lasers, it can implement functions with strong real-time performance, robustness, and high accuracy such as positioning and mapping, which in turn can provide comprehensive support for motion planning, path navigation, and positioning based on the high-precision environmental map created. Furthermore, the main controller 106 can control the movement of the autonomous mobile device based on environmental images, such as continuing to move forward, back, turn, and other actions.

Further, as shown in Figure 2b, the structured light module 21 also includes: an indicator light 105 and a drive circuit 100. Here, taking the module controller 104 as an MCU for example, the principle of the MCU working in conjunction with the main controller 106 is described. As shown in Figure 2b, after the structured light module 21 is powered on, the MCU initializes the first camera 101 through the I2C (Inter Integrated Circuit) interface. After the initialization of the first camera 101 is completed, the MCU sends a Trig trigger signal to the first camera 101 through the I2C interface to trigger the exposure of the first camera 101. When the first camera 101 begins exposure, it also sends an LDE STROBE synchronization signal to the MCU through the I2C interface. After receiving the LDE STROBE synchronization signal, at the rising edge of the LED STROBE signal, the MCU controls the frequency and current of the line laser emitter 102 through the drive circuit 100, driving the line laser emitter 102 to emit laser lines. At the falling edge of the LED STROBE signal, the MCU turns off the line laser emitter 102. After the exposure is completed, the first camera 101 sends the collected image data to the MCU through the Digital Video Port (DVP) for processing, and the MCU outputs the first environmental image to the main controller 106 through the SPI (Serial Peripheral Interface) interface. Optionally, the MCU can perform some image preprocessing operations on the image data collected by the first camera 101, such as denoising, image enhancement, etc. Additionally, the main controller 106 can also send control signals through the MIPI (Mobile Industry Processor Interface) interface to control the second camera 103 to collect the second environmental image within its field of view, and receive the second environmental image sent by the second camera 103 through the MIPI interface. Furthermore, the main controller 106 can also send the working status information of the second camera 103 to the MCU, for the MCU to control the indicator light 105 to light up or turn off based on the working status information of the second camera 103 through the drive circuit 100. After obtaining the first and second environmental images, the main controller 106 can use AI algorithms to recognize more object information in the working environment, such as the three-dimensional point cloud data, categories, textures, and materials of objects, which is more conducive to the autonomous mobile device's travel control, obstacle avoidance, and overcoming obstacles in the working environment.

In the embodiments of this application, the specific location of the structured light module 21 on the device body 20 is not limited. For example, it can be but is not limited to the front, rear, left, right, top, middle, and bottom of the device body 20. Further, the structured light module 21 is positioned at the middle, top, or bottom position in the height direction of the device body 20.

In an optional embodiment, as the autonomous mobile device moves forward to perform a task, to better detect the environmental information ahead, the structured light module 21 is positioned on the front side of the device body 20; the front side is the side towards which the device body 20 faces as the autonomous mobile device moves forward.

In another optional embodiment, to protect the structured light module 21 from external force damage, the front side of the device body 20 is also equipped with a bumper 22, which is located on the outside of the structured light module 21. As shown in Figures 2c and 2d, a schematic diagram of the disassembly of the structured light module 21 and the bumper 22 is provided. In Figures 2c and 2d, the autonomous mobile device is illustrated as a vacuum cleaning robot by example, but is not limited to this. The structured light module 21 can be installed on the bumper 22; it is also possible not to install it on the bumper 22, which is not limited. The bumper 22 has a window 23 corresponding to the area of the structured light module 21 to expose the first camera 101, the line laser emitter 102, the indicator light 105, and the second camera 103. Furthermore, optionally, as shown in Figure 2c, the bumper 22 is designed with three windows, namely the first window 231, the second window 232, and the third window 233, where the second window 232 is used to expose the first camera 101, the second camera 103, and the indicator light 105, and the first window 231 and the third window 233 are used to expose the corresponding line laser emitter 102.

Additionally, installing the structured light module onto the bumper can minimize the gap between the first camera, the second camera, and the bumper as much as possible, reduce the obstruction of the field of view of the first and second cameras, and also use a smaller second window 232, enhancing the aesthetic appearance of the autonomous mobile device, greatly saving space, and supporting various types of autonomous mobile devices.

Furthermore, optionally, to ensure the safety of the first camera 101 or the second camera 103, a light-transmitting protective plate is installed on the first window 231. It should be understood that if the autonomous mobile device collides with an obstacle, the light-transmitting protective plate on the first window 231 can reduce the likelihood of the first camera 101 or the second camera 103 being damaged by the collision. Additionally, the light-transmitting protective plate can ensure that the first camera 101 or the second camera 103 can perform normal image collection work.

Furthermore, optionally, a sealing ring is placed between the first window 231 and the light-transmitting protective plate. The sealing ring can prevent dust and mist from contaminating the lens of the first camera 101 or the second camera 103, causing a decline in image quality. Optionally, the sealing ring is made of EVA (Ethylene Vinyl Acetate Copolymer) material.

Furthermore, optionally, a sealing ring is placed between the line laser emitter 102 and the light-transmitting protective plate to prevent dust and mist from contaminating the lens of the line laser emitter 102, causing light spot deformation or power reduction. Optionally, the sealing ring is made of EVA material.

Furthermore, optionally, to ensure the safety of the line laser, a light-transmitting protective plate is installed on the second window 232 or the third window 233. Optionally, the light-transmitting protective plate is designed to transmit the line laser. It should be understood that if the autonomous mobile device collides with an obstacle, the light-transmitting protective plate on the second window 232 or the third window 233 can reduce the likelihood of the line laser being damaged by the collision.

In yet another optional embodiment, the structured light module 21 is installed on the inner wall of the bumper 22. Figure 2d shows a schematic diagram of the disassembly of the structured light module 21 and the bumper 22.

In another optional embodiment, the distance from the center of the structured light module 21 to the working surface of the autonomous mobile device ranges from 20 to 60mm. In order to minimize the space blind spots of the autonomous mobile device and ensure a sufficiently large field of view, it is further optional that the distance from the center of the structured light module 21 to the working surface of the autonomous mobile device is 47mm.

Furthermore, in addition to the various components mentioned above, the autonomous mobile device of this embodiment may also include some basic components, such as one or more memory units, communication components, power components, driving components, etc.

The one or more memory units are primarily used to store computer programs, which can be executed by the main controller 106, causing the main controller 106 to control the autonomous mobile device to perform corresponding tasks. In addition to storing computer programs, one or more memory units can also be configured to store various other data to support operations on the autonomous mobile device. Examples of these data include instructions for any applications or methods operating on the autonomous mobile device, map data of the environment/scene where the autonomous mobile device is located, working modes, working parameters, etc.

Furthermore, in addition to the various components mentioned above, the autonomous moving device of this embodiment may also include some basic components, such as one or more memory units, communication components, power components, driving components, etc.

Existing vacuum cleaning robots cannot meet the detailed cleaning needs of people in household environments, and for complex and intricate home environments, existing vacuum cleaning robots do not perform cleaning tasks in a targeted and adaptive manner, leading to long cleaning times, low efficiency, and poor user experience. To address this technical issue, in the embodiments of this application, by fully utilizing and integrating the structured light module on the autonomous mobile device to obtain richer environmental data, different types of objects in the working environment are identified, and then different machine behavior modes are adopted for different types of objects to perform tasks in a more targeted, refined, and purposeful manner. This approach not only shortens the operation time but also improves operational capability and user experience. Especially for vacuum cleaning robots, adopting different machine behavior modes for different types of objects can achieve more targeted, refined, and purposeful cleaning operations, not only shortening the cleaning time but also enhancing cleaning capability and improving user experience.

This disclosure provides various methods that can be implemented by an autonomous mobile device. In this embodiment, an autonomous mobile device can be any mechanical device capable of moving spatially with high autonomy in its environment, such as robots, purifiers, autonomous vehicles, etc. Here, robots may include vacuum cleaning robots, companion robots, or guide robots, among others. The explanation of "autonomous mobile device" given here applies to all embodiments of this application, and will not be reiterated in subsequent embodiments.

Before detailing the various methods provided in this embodiment, an explanation is given for the structured light module that can be adopted by the autonomous mobile device. In the embodiments of this application, the autonomous mobile device is equipped with a structured light module. The structured light module used in these embodiments broadly refers to any structured light module that includes a structured light component and a vision sensor.

The structured light component includes line laser emitters 102 and a laser camera 101. The line laser emitters 102 are used to emit visible or invisible line lasers, and the laser camera 101 is responsible for capturing laser images of the environment detected by the line lasers. Specifically, the line lasers emitted by the line laser emitters 102 form laser stripes on objects encountered in the environment, and the laser camera 101 captures laser images within its field of view that include these laser stripes. Using the principle of triangulation for distance measurement, the position of the laser stripes in the laser images, and the coordinate transformation relationship between the coordinate system of the laser camera 101, the device coordinate system of the autonomous mobile device, and the world coordinate system, it is possible to detect three-dimensional point cloud data, contours, heights, widths, depths, lengths, and other information of objects within the field of view of the laser camera 101 from the laser images.

In Figure 1, the autonomous mobile device moves on a work surface (such as the ground, a tabletop, or a glass surface) in the forward direction, emitting line lasers outward through the line laser emitter 102. If the line laser encounters an object in the front working area, it forms laser stripes on the object. At this time, the laser camera 101 captures laser images that include the laser stripes. Based on the position of the laser stripes in the laser images, the principle of triangulation, the coordinate system of the laser camera 101, the device coordinate system of the autonomous mobile device, and the world coordinate system, it is not difficult to calculate the height *h* (i.e., the distance between the points on the object and the work surface), the depth s (i.e., the distance from the points on the object to the autonomous mobile device), the three-dimensional point cloud data of the points, the width b of the object (the width direction is perpendicular to the forward direction), and the length *a* of the object (the length direction is parallel to the forward direction). After obtaining the three-dimensional point cloud data of multiple points on the object, analyzing the point cloud data can determine the contour information of the object.

The vision sensor 103 can be a visual camera capable of capturing visible light images, including but not limited to monocular RGB cameras and binocular RGB cameras, etc. Furthermore, optionally, the filter of the vision sensor 103 cannot penetrate the reflected light from objects reflected back by the line laser emitted by the line laser emitter 102, ensuring that the vision sensor 103 can capture visible light images that do not include laser stripes produced by the line laser upon encountering objects, as shown in the visible light images of Figure 1, thereby ensuring the quality of the image data collected by the vision sensor 103.

It is noteworthy that the above-mentioned structured light module can detect information such as three-dimensional point cloud data, contours, heights, widths, depths, lengths, etc., of objects through the structured light component. Through the vision sensor 103, it is possible to perceive information about the color characteristics, texture features, shape features, and spatial relationship features of objects, thereby perceiving richer environmental information, which is beneficial in helping to enhance the level of intelligence of the autonomous mobile device.

Below, in conjunction with Figures 2-3, a brief explanation is given on the structure and working principles of several types of structured light modules that can be adopted by the embodiments of this application. Those skilled in the art should understand that the structured light modules listed below are only for illustrative purposes, and the structured light modules that can be adopted in the embodiments of this application are not limited to these types.

As shown in Figures 2 to 3, a structured light module mainly includes: a structured light component and a vision component. The structured light component includes a laser camera 101, and line laser emitters 102 distributed on both sides of the laser camera 101. The vision component includes a vision sensor 103. The structured light component or vision component can be controlled by a controller inside the structured light module or an external controller. For ease of understanding, the controller inside the structured light module is referred to as module controller 104. In Figure 2, the module controller 104 is represented by a dashed box, indicating that the module controller 104 is an optional component. Once the structured light module is applied to an autonomous moving device, all or part of the components within the structured light module can work under the control of the autonomous moving device's main controller 106. For ease of understanding, an example is provided where the structured light component works under the control of the module controller 104, and the vision component works under the control of the main controller 106.

The line laser emitters 102 can be installed above, below, to the left, or to the right of the laser camera 101, as long as the line lasers emitted by the line laser emitters 102 are within the field of view of the laser camera 101. In Figures 2 and 3, an example is given where the line laser emitters 102 are installed on both sides of the laser camera 101. As shown in Figure 1, in the structured light module, the laser plane emitted by the line laser emitters 102 forms laser stripes on obstacles or the surface of the ground that are horizontal to the ground and perpendicular to the direction of advancement of the autonomous mobile device. This installation method can be referred to as horizontal installation. Figure 1 shows the installation and application status of the structured light module on the autonomous mobile device.

As shown in Figure 1, as the autonomous mobile device moves forward, the structured light module can be controlled to work in a certain manner, for example, performing environmental detection periodically (every 20ms), thus obtaining a set of laser image data. Each laser image data includes laser stripes formed on the surface of objects or the ground by the line laser, with a laser stripe containing multiple three-dimensional data points. The three-dimensional data from a large number of laser stripes in the laser images can form three-dimensional point cloud data.

Optionally, the module controller 104 can control the exposure of the laser camera 101 on one hand, and on the other hand, it can control the line laser emitter 102 to emit line lasers during the exposure period of the laser camera 101, facilitating the collection of laser images detected by the line lasers by the laser camera 101. The module controller 104 may control the line laser emitters 102, located on both sides of the laser camera 101, to work simultaneously or alternately, without any restriction. The embodiments of this application do not limit the implementation form of the module controller 104, which can be, but is not limited to, processors such as CPU, GPU, or MCU. The embodiments of this application also do not limit the manner in which the module controller 104 controls the structured light module. Any implementation method that can realize the function of the structured light module is applicable to the embodiments of this application.

Specifically, the module controller 104 can control the exposure frequency, exposure duration, working frequency, etc., of the laser camera 101. Under the control of the module controller 104, the laser camera 101 collects laser images detected by the line lasers during the emission period of the line laser emitter 102. Based on the laser images collected by the laser camera 101, it is possible to calculate the distance (i.e., the depth information) from the structured light module or the device hosting the structured light module to objects in the front (such as obstacles), as well as the three-dimensional point cloud data, contours, shapes, heights, and/or widths, volumes, etc., of the objects in the front. Further, three-dimensional reconstruction can also be performed. The principle of laser triangulation can be utilized, calculating the distance between the laser camera 101 and the objects in the front using trigonometric functions.

In this embodiment, the implementation form of the line laser emitters 102 is not limited; it can be any device/product form capable of emitting line lasers. For example, the line laser emitters 102 can include, but not limited to, laser diodes. In this embodiment, the wavelength of the line laser emitted by the line laser emitters 102 is also not limited; different wavelengths will result in lasers of different colors, such as red lasers, purple lasers, etc. Additionally, the line laser can be visible light or invisible light.

In the application, the implementation form of the laser camera 101 is not limited. Any visual device capable of capturing laser images of the environment detected by the line lasers emitted by the line laser emitters 102 is applicable to the embodiments of this application. For example, the laser camera 101 can use a camera capable of capturing the line lasers emitted by the line laser emitters 102. Compatible with the wavelength of the line laser emitted by the line laser emitters 102, the laser camera 101 can also be an infrared camera, ultraviolet camera, starlight camera, high-definition camera, a 2D visual camera with a filter for red lasers, a 2D visual camera with a filter for purple lasers, and so on. The laser camera 101 can capture laser images within its field of view. The field of view of the laser camera 101 includes the vertical field of view, horizontal field of view, and diagonal field of view. In this embodiment, the field of view of the laser camera 101 is not limited and can be chosen based on application needs to select a laser camera 101 with an appropriate field of view. Optionally, the horizontal field of view of the laser camera 101 can be 100.6°; or the vertical field of view can be 74.7°; or the diagonal field of view can be 133.7°.

In the application, as long as the line lasers emitted by the line laser emitters 102 are within the field of view of the laser camera 101, the angle between the laser stripes formed on the surface of objects and the horizontal plane should not be limited to specific examples. For example, it can be parallel or perpendicular to the horizontal plane or at any angle to the horizontal plane, specifically based on application requirements.

In the application, the implementation form of the vision sensor 103 is not limited. Any visual device capable of capturing visible light images is applicable to the embodiments of this application. Visible light images can present characteristics such as color features, texture features, shape features, and spatial relationship features of objects in the environment, which can help in identifying the type, material, and other information of objects. In the embodiments of this application, the environmental images captured by the vision sensor 103 within its field of view are visible light images. The vision sensor 103 can include, but not limited to, monocular RGB cameras, binocular RGB cameras, etc. A monocular RGB camera includes one RGB camera, while a binocular RGB camera includes two RGB cameras. An RGB camera is a 2D visual camera capable of capturing RGB images. The laser camera 101 can capture environmental images within its field of view. The field of view of the vision sensor 103 includes the vertical field of view, horizontal field of view, and diagonal field of view. In this embodiment, the field of view of the vision sensor 103 is not limited and can be chosen based on application needs to select a vision sensor 103 with an appropriate field of view. Optionally, the horizontal field of view of the vision sensor 103 can be 148.3°; or the vertical field of view can be 125.8°; or the diagonal field of view can be 148.3°.

It should be understood that the filter of an RGB camera cannot penetrate the reflected light from objects reflected back by the line lasers emitted by the line laser emitters 102. Therefore, the RGB camera can capture visible light images that do not include laser stripes produced by the line laser upon encountering objects. It is understood that the environmental images captured by the vision sensor 103 within its field of view are visible light images that do not contain laser stripes.

Optionally, the vision sensor 103 works under the control of the main controller 106. For example, the main controller 106 can control the exposure frequency, exposure duration, working frequency, etc., of the vision sensor 103.

Furthermore, optionally, referring to Figures 2 and 3, the vision component in the structured light module can also include an indicator light 105, where the on/off status of the indicator light 105 indicates the working state of the vision sensor 103. For example, the lighting up of the indicator light 105 indicates that the vision sensor 103 is in working state. The turning off of the indicator light 105 indicates that the vision sensor 103 is in the off state. Optionally, the indicator light 105 works under the control of the module controller 104. The module controller 104 can interact with the main controller 106 to receive the working state of the vision sensor 103 sent by the main controller 106 and control the on/off status of the indicator light 105 based on the working state of the vision sensor 103.

Furthermore, optionally, to enhance the intelligence of the structured light module, the module controller 104 can control the image collection work of the structured light component and vision component and undertake the data processing work for the laser image data and visible light image data collected by the structured light component and vision component.

Optionally, to reduce the data processing workload of the structured light module and enhance the image acquisition efficiency of the structured light module, the main controller 106 undertakes the data processing tasks for the laser image data and visible light image data collected by the structured light component and vision component. In this scenario, the structured light module sends the laser image data collected by the structured light component to the main controller 106 through the module controller 104, while the main controller 106 acquires the visible light image data collected by the vision component. The main controller 106 can analyze the laser image data to derive three-dimensional point cloud data of objects, contours, shapes, heights and/or widths, volumes, etc. The main controller 106 can also analyze the visible light image data to identify information about the object's color characteristics, texture features, shape features, spatial relationship features, types, materials, and more.

The technical solutions provided by the embodiments of this application are explained in detail below, in conjunction with the accompanying drawings.

Figure 4 is a flowchart of a working method provided by an exemplary embodiment of this application. This method is applicable to autonomous mobile devices equipped with a structured light module. For an introduction to the structured light module, please refer to the aforementioned content. As shown in Figure 1, the method includes the following steps:
401, Utilize the structured light component and vision sensor within the structured light module to collect structured light data and image data of an operation area ahead, respectively.
402, Based on the image data, identify a category of a target object present in the operation area ahead and select a target machine behavior mode that matches the category of the target object.
403, Based on the structured light data, control the autonomous mobile device to perform an operation task in connection with the target object present in the operation area ahead according to the target machine behavior mode.

In the embodiments of this application, the autonomous mobile device can utilize the structured light module to detect environmental information of the operation area ahead during its operation. Here, the operation area ahead refers to the range that the autonomous mobile device can recognize along its direction of movement during operation, and the environmental information of this operation area changes as the autonomous mobile device moves. The environmental information of the operation area ahead varies in different operation areas. Specifically, the structured light component is used to collect structured light data from the operation area ahead, i.e., after the line laser emitter emits line lasers to the operation area ahead, the laser camera collects laser image data of the environment detected by the line lasers. At the same time, the vision sensor is used to collect image data from the operation area ahead, which consists of visible light image data.

After obtaining the structured light data and image data of the operation area ahead, the first step is to identify based on the image data whether objects exist in the operation area ahead and the categories to which these objects belong.

It is noteworthy that, in the embodiments of this application, object categories are classified from the perspective of the impact of objects on the operation of the autonomous mobile device. For example, object categories can roughly be divided into: prone to jamming, prone to entanglement, prone to dirtiness, and movable, but are not limited to these categories. It should be understood that prone to jamming objects refer to objects in the work environment that may easily cause the autonomous mobile device to get trapped or stuck; prone to entanglement objects refer to objects in the work environment that may easily entangle the autonomous mobile device; prone to dirtiness objects refer to objects in the work environment that may easily make their surrounding area dirty; movable objects refer to objects in the work environment that can be moved, which may interfere with the normal progress of the autonomous mobile device on one hand, and with the execution of operation tasks by the autonomous mobile device on the other hand, for example, places occupied by movable objects cannot be cleaned by the autonomous mobile device, requiring some special handling methods.

Taking a household environment as an example, suppose the following objects exist in the household environment: trash cans, charging docks, shoes, bowls and basins, U-shaped chairs, bar stools, sliding door rails, clothes, carpet edges, wires, people, and animals, etc. Among these objects, some belong to the prone to jamming category, some to the prone to entanglement category, some to the prone to dirtiness category, and some are movable objects. For example, objects in the prone to jamming category include but are not limited to: U-shaped chairs, bar stools, sliding door rails. Objects in the prone to entanglement category include but are not limited to: clothes, carpet edges, wires. Objects in the prone to dirtiness category include but are not limited to: trash cans, charging docks, shoes, bowls and basins. For example, movable objects include but are not limited to: people, animals, etc.

In the embodiments of this application, the categories of objects existing in the operation area ahead identified based on the image data collected by the vision sensor in the structured light module are referred to as target object categories. The target object categories can include any one or several of the object categories listed above, without limitation. Furthermore, the embodiments of this application do not limit the methods for identifying the target object categories in the operation area ahead based on the image data collected by the vision sensor in the structured light module. The following are examples of how to identify target object categories:
Optionally, the autonomous mobile device can use AI (Artificial Intelligence) algorithms to perform object recognition on the image data collected by the vision sensor in the structured light module, thereby identifying the categories of target objects existing in the operation area ahead of the autonomous mobile device. Optionally, the AI recognition results include which object in the work environment the object is and the category to which the object belongs. Specifically, object recognition on the image data collected by the vision sensor in the structured light module based on AI algorithms can involve using a pre-trained neural network model to recognize objects in the image data collected by the vision sensor in the structured light module. Specifically, a large number of sample object images can be prepared and labeled with the object categories belonging to the objects in the sample images. Model training can be conducted based on the sample object images and their labeling results to obtain an image recognition model capable of identifying object categories. This image recognition model can be built into the autonomous mobile device. Afterward, once the vision sensor in the structured light module collects image data from the operation area ahead of the autonomous mobile device, the autonomous mobile device can use this image recognition model to recognize objects in the image data, thereby identifying the categories of target objects existing in the operation area ahead. The network structure of the image recognition model includes, but not limited to, CNN (Convolutional Neural Networks), RNN (Recurrent Neural Network), and LSTM (Long Short-Term Memory networks).

Furthermore, optionally, the image recognition model used in the embodiments of this application includes a feature extraction network and a classification neural network. An implementation process of the image recognition model based on image data to identify the categories of objects existing in the operation area ahead of the autonomous mobile device is: inputting the image data into the feature extraction network, generating at least one candidate box on the image data, and performing pooling on the feature mapping map corresponding to each candidate box to obtain a first feature vector. Further, based on the first feature vector corresponding to each candidate box, select effective candidate boxes from at least one candidate box; effective candidate boxes refer to candidate boxes that delineate image areas containing objects. The images within the effective candidate boxes are input into the classification neural network, and feature extraction is performed on the images within the effective candidate boxes to obtain a second feature vector. Based on the second feature vector, the object category belonging to the objects in the effective candidate boxes is identified. For example, the second feature vector can be matched with the feature vectors corresponding to known objects in a previously maintained feature library, and the category belonging to the known objects matched by the second feature vector in the feature library can be identified as the category of the objects within the effective candidate boxes.

Optionally, the feature library maintains the association between known objects and their object categories, where known objects refer to those whose object categories have been confirmed.

In the above or below embodiments of this application, after the autonomous mobile device identifies the target objects existing in the operation area ahead and their respective target object categories, it can also update the recognized target objects and their categories in the environmental map within the map area corresponding to these target objects.

Furthermore, optionally, in the embodiments of this application, there may be some objects and their categories in the work environment that are not recognized by the AI algorithm. For these objects and their categories, users are allowed to add information about these objects and their categories to the environmental map. Specifically, users can view the environmental map on the display screen of a terminal device bound to the autonomous mobile device or on the display screen of the autonomous mobile device itself, and compare the objects and their categories already existing in the environmental map with the actual objects and their categories in the work environment of the autonomous mobile device. If the actual objects and their categories in the work environment do not match the objects and their categories recorded in the environmental map, users can update the environmental map to more accurately reflect the information of the actual objects and their categories existing in the work environment, making the environmental map more consistent with the work environment. It should be understood that an environmental map more consistent with the work environment can help improve the accuracy of the autonomous mobile device's perception of objects in the work environment, which is beneficial to enhancing the operational performance of the autonomous mobile device.

Scenarios where the actual objects and their categories in the work environment do not match the objects and their categories recorded in the environmental map include the following:
Scenario one: There are some objects and their categories actually existing in the work environment that do not appear in the environmental map;
Scenario two: Some objects and their categories actually existing in the work environment are inconsistent with the information marked in the environmental map.

For ease of understanding and distinction, objects that actually exist in the work environment but do not appear in the environmental map are referred to as "first objects". Users can add information about these first objects and their categories to the environmental map based on their location information in the work environment.

For ease of understanding and distinction, objects that genuinely exist in the work environment but are inaccurately marked in the environmental map are referred to as "second objects". Users can modify the related information of the second objects in the environmental map to match their real information.

Furthermore, to meet users' needs for modifying known object categories, the autonomous mobile device can also display known object categories upon receiving a modification request from the user for these categories. It then responds to the first modification operation initiated for the known object categories, acquiring the modified object category. The known object categories are those set by users on the environmental map and/or identified by the autonomous mobile device based on historical image data. The first modification operation includes at least one of the following: changing the name of the object category, adjusting the objects corresponding to a category, and deleting known object categories.

When modifying the name of an object category, the objects under the category before modification become objects under the category after modification. For example, changing the object category of shoes from "prone to dirtiness" to "prone to entanglement".

In the case of adjusting the objects corresponding to a category, the object category of the adjusted objects changes. For example, the objects under the "prone to jamming" category changing from U-shaped chairs, bar stools, and sliding door rails to just U-shaped chairs and bar stools, i.e., removing sliding door rails from the "prone to jamming" category.

When deleting a known object category, the objects under the deleted category will subsequently not be recognized as belonging to the deleted known category.

In situations where the actual objects and their categories in the work environment do not match the objects and their categories recorded in the environmental map, users can set the correct objects and their categories in the environmental map. At this time, the object categories set by users in the environmental map are considered known object categories.

It should be noted that if the autonomous mobile device learns that the information of known object categories has been modified, it can then combine the modified known object category information with image data collected by the vision sensor to identify the target object categories in the operation area ahead of the autonomous mobile device. This adaptation allows for a more accurate reflection of the work environment in the environmental map, facilitating improved operational performance and navigation of the autonomous mobile device within its operational environment.

After identifying the categories of target objects existing in the operation area ahead based on image data, a target machine behavior mode compatible with the target object categories is selected. It is understood that the target machine behavior mode compatible with the target object categories is a targeted operational mode selected for the autonomous mobile device based on the categories of target objects. When the autonomous mobile device performs operation tasks on the target objects in the operation area ahead according to the target machine behavior mode, its operational capability is minimally impacted by the target objects. The target machine behavior modes compatible with the target object categories are introduced as follows for different scenarios:
Scenario 1: For objects prone to jamming, the target machine behavior mode can be an obstacle avoidance mode or an accelerated passage mode. If the autonomous mobile device encounters an object prone to jamming during its operation, and if the jamming object is impassable, the autonomous mobile device will avoid the jamming object according to the obstacle avoidance mode. If the jamming object is passable, the autonomous mobile device will quickly pass through the jamming object according to the accelerated passage mode, thereby reducing the probability of getting trapped or stuck by the jamming object.

For example, if a robot vacuum cleaner encounters impassable objects prone to jamming, such as U-shaped chairs or bar stools, during the cleaning task, it will forego cleaning around the U-shaped chairs or bar stools and avoid these impassable jamming objects according to the obstacle avoidance mode.

If the robot vacuum cleaner encounters passable objects prone to jamming, such as sliding door rails, it will forego cleaning around the sliding door rails and accelerate through objects like sliding door rails according to the accelerated passage mode.

Scenario 2: For objects prone to entanglement, the target machine behavior mode can be a reduced-speed operation mode. In this case, the autonomous mobile device slows down its operational speed during the task to reduce the likelihood of entanglement by objects prone to entanglement.

For instance, if a robot vacuum encounters objects prone to entanglement, such as clothes, carpet edges, or wires, during the cleaning task, it can appropriately turn off the side brush or roller brush, or slow down the speed of the side brush according to the reduced-speed operation mode, i.e., stopping the cleaning task or slowing down the cleaning speed. Once the robot vacuum moves away from the entanglement-prone objects, it can resume normal cleaning operations.

Scenario 3: For objects prone to dirtiness, the target machine behavior mode can be an enhanced operation mode. In this case, the autonomous mobile device enhances its operational capability to deal with objects prone to dirtiness more intensively.

For example, if a robot vacuum encounters objects prone to dirtiness, such as trash cans, charging docks, shoes, and bowls during the cleaning task, it intensifies the cleaning effort around these types of objects according to the enhanced operation mode. In practice, the robot vacuum may increase the speed of the side brush and roller brush, as well as enhance the suction of the fan. Additionally, the robot vacuum may perform multiple repeated cleanings around these types of objects or execute multiple circular cleaning actions.

Scenario 4: For movable objects, the target machine behavior mode can be a voice prompt behavior mode. This mode enables interaction between the autonomous mobile device and movable objects, prompting the movable objects to avoid the area where the autonomous mobile device needs to perform its tasks.

For example, if a robot vacuum encounters a person during its cleaning task, it can use the voice prompt behavior mode to ask the person to move from the current location or lift their feet, allowing the robot vacuum to clean the area occupied by the person's feet.

In the embodiments of this application mentioned above or below, to accurately and quickly select the target machine behavior mode compatible with the target object categories, known object categories and their corresponding machine behavior modes can be pre-associated and stored. This allows the autonomous mobile device to query known object categories and their corresponding machine behavior modes based on the target object category, obtaining the machine behavior mode corresponding to the target object category as the target machine behavior mode.

The known object categories and their corresponding machine behavior modes can be set by the autonomous mobile device or the user, with no restrictions on this.

Furthermore, optionally, it is also possible to support users in modifying the machine behavior modes corresponding to known object categories based on actual application needs. For example, modifications can be made to at least include the behavior parameters and actions required for the autonomous mobile device to perform its tasks. The behavior parameters include but are not limited to: number of operations, suction power of the fan, speed of the side brush, distance and directional angle relative to the target object during action execution. Behavior actions can include accelerated passage action, reduced-speed operation, obstacle avoidance action, enhanced operation action, and voice prompt action, among others.

Therefore, in the embodiments of this application mentioned above or below, the method also includes: displaying the machine behavior mode corresponding to known object categories, responding to a second modification operation initiated for the machine behavior mode, and obtaining the modified machine behavior mode. The second modification operation includes at least one of the following: modifying existing behavior parameters, adding new behavior parameters, deleting existing behavior parameters, modifying existing machine action parameters, adding new machine action parameters, and deleting existing machine action parameters.

To enhance the operational performance of the autonomous mobile device when selecting the target machine behavior mode compatible with the target object categories, the autonomous mobile device can be controlled to perform tasks on target objects in the operation area ahead with the assistance of structured light data, according to the target machine behavior mode. For instance, structured light data can detect three-dimensional point cloud data, contours, shapes, heights, widths, depths (i.e., the distance of the object from the autonomous mobile device), lengths, thicknesses, and volumes of objects. By combining the above structured light data, the operational performance of the autonomous mobile device can be improved.

The work method provided in the embodiments of this application makes full use of the structured light module on the autonomous mobile device to obtain richer environmental data. It identifies the types of objects in the work environment and then applies different machine behavior modes for different types of objects to perform tasks more targetedly, delicately, and purposefully. This approach not only shortens the operation time but also improves operational capability and enhances the user experience. Especially for robot vacuums, using different machine behavior modes for different types of objects achieves more targeted, refined, and purposeful cleaning operations, which can not only reduce cleaning time but also enhance cleaning capability and improve the user experience.

In the embodiments of this application mentioned above or below, to improve the accuracy of object category recognition in the operation area ahead of the autonomous mobile device, the target object categories identified based on image data can be corrected with the aid of structured light data before selecting the target machine behavior mode compatible with the target object categories. For example, structured light data can be used to verify if the object's height, width, length, or volume matches the identified target object category. Additionally, considering the specific similarity of contours among objects of the same category, structured light data can also be used to identify the object's contour and correct the target object category based on contour information.

Therefore, in the embodiments of this application mentioned above or below, before selecting the target machine behavior mode compatible with the target object category, the method also includes: identifying the contour of the target object existing in the operation area ahead based on structured light data; correcting the target object category based on the contour of the target obj ect.

Exemplarily, when identifying the contour of the target object in the operation area ahead based on structured light data, the process may involve first obtaining the three-dimensional point cloud data of the target object based on structured light data, performing three-dimensional reconstruction of the target object based on its three-dimensional point cloud data, and extracting contour features of the reconstructed target object to obtain its contour.

In some optional embodiments of this application, contour features of objects belonging to any object category can be pre-extracted. If the contour of the target object matches the contour features of objects within the target object category, there is no need to correct the target object category. If the contour of the target object does not match the contour features of objects within the target object category, the object category corresponding to the contour of the target object is taken as a reference object category. The target object category is corrected based on this reference object category, where different object categories have distinct object contours. In some optional embodiments of this application, a process for correcting the target object category based on the reference object category involves directly correcting the target object category to the reference object category if the difference between the target object category and the reference object category is less than a set threshold. Alternatively, if the difference between the target object category and the reference object category is greater than or equal to the set threshold, an intermediate state object category that transitions between the target and reference object categories is determined, and the target object category is corrected to this intermediate state object category.

In some optional embodiments of this application, a process for refining the target object category based on the contour of the target object involves further subdividing the target object category into more granular subcategories based on the object's contour. For instance, within the category prone to jamming, there are non-hollow objects like sliding door rails as well as hollow objects like U-shaped chairs and bar stools. When encountering non-hollow objects, the autonomous mobile device can accelerate to quickly pass over them to avoid getting trapped. Conversely, when encountering hollow objects, the autonomous mobile device can refine the object category to identify whether the hollow object is passable.

Therefore, in some optional embodiments of this application, the process of subdividing the target object category into more granular subcategories based on the object's contour, specifically under the prone to jamming category, involves determining if the object's contour indicates it is a hollow object. If the object is determined to be hollow, the process involves comparing the hollow width of the object and the width of the autonomous mobile device's body to categorize the object into subcategories of prone to jamming but impassable and prone to jamming but passable.

Exemplarily, the determination of whether an object is hollow and whether it belongs to the subcategory of prone to jamming but impassable or prone to jamming but passable can be made based on the height information of multiple points along the lower edge of the object's contour closest to the work surface (e.g., ground, table, or glass surface) and their corresponding horizontal distance information.

Furthermore, optionally, the first step is to identify if there are multiple points above the work surface along the lower edge of the object's contour closest to the work surface. If such points exist, indicating the object is hollow, the next step is to identify if there are continuous points along the lower edge with a hollow width greater than the width of the autonomous mobile device and a height greater than the height of the autonomous mobile device. If such continuous points exist, the object category is classified as prone to jamming but passable. If there are no continuous points with a hollow width greater than the width of the autonomous mobile device or a height greater than the height of the autonomous mobile device, the object category is classified as prone to jamming but impassable.

The height of the target object is determined by averaging the heights of multiple consecutive points. The hollow width refers to the horizontal distance information corresponding to these consecutive points, which can be calculated from the coordinates of the first and last points among these points, i.e., the distance information between the first and the last point.

Referencing Figure 5, which shows a circular arch-shaped hollow object, the circles represent multiple points on the arch-shaped hollow object. The average height of these points above the ground is taken as the height of the circular arch-shaped hollow object. If the height of the circular arch-shaped hollow object is greater than the height of the autonomous mobile device, further calculate the horizontal distance information *l.* If *l* is greater than the width of the autonomous mobile device, the device can pass through the interior of the circular arch-shaped hollow object, meaning the object category is classified as prone to jamming but passable. If *l* is less than or equal to the width of the autonomous mobile device, or if the height of the circular arch-shaped hollow object is less than or equal to the height of the autonomous mobile device, then the device cannot pass through the interior of the circular arch-shaped hollow object, meaning the object category is classified as prone to jamming but impassable.

In the embodiments of this application mentioned above or below, the process of controlling the autonomous mobile device to perform tasks on target objects in the operation area ahead according to the target machine behavior mode, with the assistance of structured light data, involves: identifying the position information and/or shape parameters of the target objects existing in the operation area ahead based on structured light data. Based on the position information and/or shape parameters of the target objects, the autonomous mobile device is controlled according to the target machine behavior mode to perform tasks on the target objects.

The position information of the target object can be its three-dimensional point cloud data, and the shape parameters include but are not limited to contour, height, width, depth, and length information.

The process of controlling the autonomous mobile device to perform tasks on target objects based on the objects' position information and/or shape parameters according to the target machine behavior mode is detailed below for different scenarios.

Scenario 1: For objects classified as prone to jamming and impassable, the obstacle avoidance behavior mode is selected as the target machine behavior mode compatible with the object category. For target objects that are prone to jamming and impassable, it is necessary to consider not only the position information of the target object to determine if the distance between the autonomous mobile device and the target object is close to the obstacle avoidance distance but also to consider the contour parameters among the shape parameters to minimize damage to the autonomous mobile device by the edges of the target object's contour during the avoidance process. Accordingly, the process of controlling the autonomous mobile device to perform tasks on target objects based on the objects' position information and/or shape parameters is to use the contour parameters from the object's shape parameters, in addition to its position information, to navigate around the object according to the obstacle avoidance behavior mode.

For example, if U-shaped chairs or bar stools are classified as prone to jamming and impassable target objects, and the autonomous mobile device is approaching the obstacle avoidance distance from these objects, it begins to navigate around them. During this process, it continuously monitors to ensure it does not come into contact with the edges of the U-shaped chairs or bar stools.

Scenario 2: For objects classified as prone to jamming and passable, the accelerated passage behavior mode is selected as the target machine behavior mode compatible with the object category. If the target object is a non-hollow object, such as a sliding door rail, the autonomous mobile device is controlled to quickly pass over the sliding door rail according to the accelerated passage behavior mode.

If the target object is a hollow object, such as U-shaped chairs or bar stools, it's necessary to consider not only the position information of the target object to determine if the autonomous mobile device is approaching the distance for obstacle avoidance but also to consider the hollow width and height among the shape parameters. This ensures the autonomous mobile device can navigate through passable areas of the target object, minimizing collisions during the passage. Accordingly, the process of controlling the autonomous mobile device to perform tasks on target objects based on the objects' position information and/or shape parameters involves using the hollow width and height from the object's shape parameters, in addition to its position information, to guide the autonomous mobile device through the hollow area of the object according to the accelerated passage behavior mode, continuing its task beyond the object.

In some optional embodiments of this application, the accelerated passage behavior mode includes a first indicative parameter that signals an acceleration action and first execution parameters necessary for performing the acceleration action. These execution parameters comprise direction parameters, distance parameters, and speed parameters. The first indicative parameter primarily indicates whether the action to be performed is an acceleration action. The first execution parameters refer to the parameters needed to execute the acceleration action, such as at least one of direction parameters, distance parameters, and speed parameters. The distance parameter, for example, could specify how far from the target object the autonomous mobile device should begin to initiate the accelerated passage mode, or how far from the target object the autonomous mobile device should end the accelerated passage mode.

If the target object is a non-hollow object, such as a sliding door rail, the autonomous mobile device could start to accelerate when it is 15 cm away from the sliding door rail, moving in a direction at a 45-degree angle towards the sliding door rail at a speed of 30 cm per second. The device could exit the accelerated passage mode and return to normal speed mode after moving at least 10 cm away from the sliding door rail.

For non-hollow objects like U-shaped chairs or bar stools, the process of controlling the autonomous mobile device to navigate through the hollow area of the target object to continue its task under the accelerated passage mode is based on the position information and shape parameters of the target object, including the hollow width and height. This involves adjusting the orientation of the autonomous mobile device using the direction parameter to face the hollow area of the target object. The device is then controlled to accelerate along the current orientation, based on the distance and speed parameters, until it passes through the hollow area of the target obj ect.

It is understood that the autonomous mobile device's orientation towards the target object's hollow area refers to the device's ability to navigate through the passable hollow area. If the target object is a U-shaped chair or bar stool, the device would accelerate when it is 15 cm away from the U-shaped chair or bar stool, moving towards the chair or stool at a 45-degree angle at a speed of 30 cm per second. The device can exit the accelerated passage mode and return to normal speed mode after moving at least 10 cm away from the U-shaped chair or bar stool.

In Scenario 3, where the target object category is identified as prone to entanglement, a reduced-speed operation behavior mode is chosen as the target machine behavior mode compatible with the object category. Accordingly, the process of controlling the autonomous mobile device to perform tasks on target objects based on the objects' position information and/or shape parameters involves managing operations based on the contour edge positions of the target objects. For example, objects like clothes, wires, and carpets that are prone to entanglement can have their contour edges identified using structured light data. Based on the edge positions of these objects, devices like robot vacuums can reduce their operational speed around these objects to decrease the likelihood of missed areas and avoid entanglement.

In some optional embodiments of this application, the reduced-speed operation behavior mode includes a second indicative parameter signaling the reduced-speed operation and second execution parameters required for the reduced-speed operation. These execution parameters at least include an obstacle avoidance distance and a first side brush speed that is below a speed threshold. The speed threshold and the first side brush speed are set according to actual application needs.

If the target object is an object like clothes or wires, which can only be worked around but not on top of, the autonomous mobile device can control its side brush to perform cleaning tasks within an area around the target object that is greater than the obstacle avoidance distance, based on the second indicative and execution parameters.

For objects like carpets, which require operations both around and on top of them, the process involves controlling the autonomous mobile device to perform tasks within an area around the target object that is greater than the obstacle avoidance distance, based on the contour edge positions. When the device climbs on top of the target object to perform tasks, it uses the height information of the upper edge of the contour, combined with the first side brush speed, to drive its side brush for cleaning tasks above the target object. The upper edge of the contour refers to the edge of the contour that is farthest from the work surface, which is the highest edge relative to other edges.

By considering the height information of the upper edge of the contour, the operational difficulty of the target object can be assessed, and further classification of the object can be made. For instance, some carpets are long-pile, while others are short-pile. Long-pile carpets have a higher upper edge height than short-pile carpets and are more challenging to clean. Both short-pile and long-pile carpets require increased suction power from the fan, with long-pile carpets requiring more suction power than short-pile carpets, whereas hard floors do not require as much suction power. Therefore, the suction power of the fan in the rolling brush of the autonomous mobile device can be adjusted based on the height information of the upper edge of the contour. This ensures a balance between cleaning efficiency and battery life of the autonomous mobile device. Thus, considering the height information of the upper edge of the contour allows for more targeted and purposeful control over the autonomous mobile device's operations.

In scenario 4 where the target object category is identified as prone to dirtiness, an enhanced operation behavior mode is selected as the target machine behavior mode compatible with this object category. Accordingly, the process for controlling the autonomous mobile device to perform tasks on target objects, based on their position information and/or shape parameters, involves using the positions of the contour edges of the target objects as a basis within the enhanced operation behavior mode. This entails controlling the autonomous mobile device to carry out tasks on the target objects according to the enhanced operation behavior mode, based on the contour edge positions derived from the shape parameters of these objects.

In some optional embodiments of this application, the enhanced operation behavior mode includes: indicating a third indication parameter for enhanced operation and a third execution parameter required for the enhanced operation, where the third execution parameter includes at least the number of operations and a second side brush rotation speed greater than the speed threshold;

Accordingly, based on the position of the contour edges in the shape parameters of the target object, the autonomous mobile device is controlled to perform the operation task on the target object according to the enhanced operation behavior mode, including:
based on the position of the contour edges in the shape parameters of the target object, controlling the autonomous mobile device to perform the operation task multiple times around the target object according to the number of operations; and during each operation task, controlling the autonomous mobile device to drive its side brush to perform cleaning tasks around the target object based on the second side brush rotation speed. Here, the second side brush rotation speed is set according to actual application needs. The second side brush rotation speed can be a higher rotation speed greater than the speed threshold.

It should be understood that the autonomous mobile device performs the operation task multiple times within the area surrounding the target object that is greater than the obstacle avoidance distance.

Scenario 5: In the case where the target object category is movable, the voice prompt behavior mode is selected as the target machine behavior mode adapted to the target object category. Accordingly, an implementation process for controlling the autonomous mobile device to perform operation tasks on the target object according to the target machine behavior mode based on the position information and/or shape parameters of the target object is: based on the position information of the target object, controlling the autonomous mobile device to issue voice prompt messages to the target object according to the voice prompt behavior mode, to prompt the target object to change its status; and in combination with the structured light data collected for the target object, identifying the latest status of the target object, and continuing to control the autonomous mobile device to perform operation tasks on the target object when the latest status meets the requirements of the voice prompts.

When a movable target object blocks the autonomous mobile device from moving forward, the autonomous mobile device can voice prompt the movable target object to change its posture, allowing the autonomous mobile device to continue moving forward.

Taking a human as an example of a movable target object, the location where a person is usually cannot be cleaned by the robot vacuum. Therefore, the robot vacuum can play voice prompts to remind the user to move aside (when the user is standing) or to lift their feet (when the user is sitting), i.e., to remind the user to change their status. Since when a person is sitting, the image data collected by visual sensors can only identify the approximate location of the person but cannot determine whether the person's feet are on the ground, after the robot vacuum reminds the user to lift their feet, the recognition result based on image data alone cannot determine whether the person's feet have been lifted. However, the structured light component can judge whether the user's feet have been lifted by comparing whether there is a change in the obstacles around the person's approximate location before and after the voice prompt. If lifted, the robot vacuum will pass through the user to clean; otherwise, the robot vacuum will clean around the user.

For ease of understanding, taking the autonomous moving device as an example of a home service robot, combined with the scenario of the home service robot performing tasks in a home environment, a detailed explanation of the travel control method for the autonomous mobile device provided in the embodiments of this application is given.

### Application Scenario Example 1:

Home service robots primarily operate within domestic environments. As illustrated in Figure 6, which represents a common type of household layout, the working areas for home service robots may include the master bedroom, living room, secondary bedroom, kitchen, bathroom, balcony, and other areas. During their operation within these areas, home service robots utilize vision sensors (such as RGB cameras) within their structured light modules to collect RGB image data of the domestic environment and identify the categories of target objects present in the operation area ahead based on this RGB image data.

When encountering obstacles that are easily trapped yet passable, such as sliding door tracks, home service robots can collect structured light data of the sliding door tracks. Specifically, this involves controlling a line laser emitter to project a line laser onto the sliding door tracks and using a laser camera to collect laser images that include the laser stripes formed on the sliding door tracks. Based on the structured light data, the robot can more accurately identify information such as the position, length, height, and angle of the sliding door tracks. The home service robot adjusts its body posture according to this information, forming an appropriate angle with the sliding door tracks. When the distance to the sliding door tracks reaches the obstacle avoidance distance, the robot accelerates to pass through, where the appropriate angle and speed help to improve the robot's ability to overcome obstacles.

For obstacles like U-shaped chairs and bar stools, which are prone to trapping, the accurate positions of the two legs of a U-shaped chair can be identified based on the structured light data collected, allowing the home service robot to avoid the legs while not missing the area between them. Similarly, the entire base disc of a bar stool can be identified based on the structured light data collected, enabling the robot to clean around the base disc accurately without getting stuck.

When encountering entangling obstacles such as clothes, wires, or carpets, the structured light data collected can precisely locate the contour edges of such objects, allowing the home service robot to approach these objects as closely as possible without entanglement, thus avoiding missed areas. Additionally, the structured light data can provide the length of carpet fibers, determining whether the carpet is long-pile or short-pile. This helps the home service robot adjust the appropriate brush suction power (increasing fan suction for long-pile carpets, which is greater than for short-pile carpets but less than for hard floors), ensuring cleaning effectiveness while maintaining battery life.

For obstacles that are prone to dirtiness, such as trash cans, charging docks, shoes, and bowls, the structured light data collected can accurately locate the contour edges of these objects, enabling the home service robot to approach these objects as closely as possible without entanglement, thus avoiding missed areas.

When encountering humans, the structured light data can be used to determine if a person's feet have been lifted by comparing changes in the person's approximate location before and after a voice prompt. If the feet are lifted, the home service robot will pass through the person to clean; otherwise, it will navigate around the person to clean.

Figure 7 presents a structural schematic diagram of an autonomous moving device provided by an exemplary embodiment of this application. As shown in Figure 7, the autonomous moving device comprises: a device body 70, equipped with one or more memories 71, one or more processors 72, and a structured light module 73 on the device body 70; the structured light module 73 includes: a structured light component 731 and a vision component 732. The structured light component 731 at least includes a laser camera 7311 and a line laser emitter 7312. The vision component 732 at least includes a vision sensor 7321. In Figure 7, the arrangement of the line laser emitter 7312 on both sides of the laser camera 7311 is shown as an example, but this is not limiting. Other implementation structures of the structured light module 73 can be referred to in the description of the aforementioned embodiments and will not be repeated here.

Wherein, one or more memories 71 are used to store computer programs; one or more processors 72 are used to execute computer programs for: using the structured light component and vision sensor in the structured light module to collect structured light data and image data from the operation area ahead, respectively; based on the image data, identify the categories of target objects present in the operation area ahead, selecting a target machine behavior mode that is compatible with the target object category; with the aid of structured light data, controlling the autonomous moving device to perform operation tasks on the target objects present in the operation area ahead according to the target machine behavior mode.

Furthermore, in addition to the various components mentioned above, the autonomous moving device in this embodiment may also include some basic components such as a communication component 74, a power supply component 75, a driving component 76, among others.

The one or more memories primarily serve to store computer programs, which can be executed by the main controller, enabling the autonomous moving device to perform corresponding tasks. Beyond storing computer programs, one or more memories may also be configured to store various other types of data to support operations on the autonomous moving device. Examples of these data include instructions for any applications or methods operated on the autonomous moving device, map data of the environment/scene where the autonomous moving device is located, work modes, work parameters, etc.

The communication component is configured to facilitate communication between the device in which it is installed and other devices, either through wired or wireless means. The device with the communication component can connect to wireless networks based on communication standards, such as WiFi, 2G, 3G, 4G, 5G, or their combinations. In one exemplary embodiment, the communication component receives broadcast signals or broadcast-related information from an external broadcast management system through a broadcast channel. In another exemplary embodiment, the communication component may also include Near Field Communication (NFC) modules, Radio Frequency Identification (RFID) technology, Infrared Data Association (IrDA) technology, Ultra-Wideband (UWB) technology, Bluetooth (BT) technology, and so on.

Optionally, the driving component may include drive wheels, drive motors, universal wheels, etc. Optionally, the autonomous moving device in this embodiment can be implemented as a robot vacuum cleaner. In the case of being implemented as a robot vacuum cleaner, the autonomous moving device can also include a cleaning component, which may comprise a cleaning motor, cleaning brushes, dusting brushes, a vacuum fan, etc. The basic components included in different autonomous moving devices and the composition of these basic components will vary. The embodiments of this application are merely some examples.

## Claims

1. A structured light module comprising: a first camera and line laser emitters distributed on both sides of the first camera; the structured light module further comprising: a second camera;
wherein, the line laser emitters are for emitting line lasers, the first camera is for collecting a first environmental image detected by the line lasers during their emission, and the second camera is for collecting a second environmental image within its field of view; the first environmental image includes a laser image with laser stripes produced when the line lasers encounter an object, and the second environmental image is a visible light image that does not include laser stripes.

2. The structured light module according to claim 1, further comprising: an indicator light for indicating a working state of the second camera, and the indicator light being on indicating that the second camera is in a working state.

3. The structured light module according to claim 2, wherein the indicator light and the second camera are symmetrically arranged on both sides of the first camera.

4. The structured light module according to claim 1, wherein an optical axis of the first camera is tilted downward at a first angle relative to a horizontal plane parallel to the ground, and an optical axis of each of the line laser emitters is tilted downward at a second angle relative to the horizontal plane, with the second angle being smaller than the first angle.

5. The structured light module according to claim 4, wherein the optical axis of the second camera is parallel to the horizontal plane.

6. The structured light module according to claim 3, wherein, at an installation position, the line laser emitters, the indicator light, the first camera, and the second camera are located at the same height.

7. The structured light module according to claim 3, further comprising: a mount; the line laser emitter, the indicator light, the first camera, and the second camera are assembled on the mount.

8. The structured light module according to claim 7, wherein the mount comprises: a main body and ends located on both sides of the main body; wherein, the indicator light, the first camera, and the second camera are assembled on the main body, and the line laser emitters are assembled on the ends;
wherein, an end face of each end is oriented towards a reference surface, so that a centerline of the line laser emitter on that end intersects with a centerline of the first camera at a point; the reference surface is a plane perpendicular to an end face of the main body or a tangent plane of the end face of the main body.

9. The structured light module according to claim 8, wherein three grooves are provided at a middle position of the main body, the indicator light, the first camera, and the second camera are installed in the corresponding grooves; mounting holes are provided on the ends, and the line laser emitters are installed in the mounting holes.

10. The structured light module according to claim 7, further comprising: a module controller fixed behind the mount;
wherein the line laser emitters, the first camera, and the indicator light are electrically connected to the module controller respectively; and with the structured light module being installed on an autonomous mobile device, the module controller and the second camera are electrically connected to a main controller of the autonomous mobile device respectively;
the main controller is used to send working state information of the second camera to the module controller; the module controller is used to control the on/off state of the indicator light based on the working state information of the second camera.

11. The structured light module according to claim 10, further comprising: a fixed cover assembled above the mount; wherein a cavity is formed between the fixed cover and the mount to accommodate connection wires between the line laser emitters, the first camera, and the module controller, and the connection wires between the module controller and the second camera and the main controller.

12. The structured light module according to claim 4, wherein an angle range of the first angle is [11, 12] degrees, and an angle range of the second angle is [7.4, 8.4] degrees.

13. The structured light module according to any one of claims 1 to 12, wherein each of the line laser emitters includes an optical shaping lens, which is a cylindrical lens or a wave lens.

14. The structured light module according to claim 13, wherein, when the optical shaping lens of each of the line laser emitters is a wave lens, within an angular range of [-30, 30] degrees relative to the optical axis of the line laser emitter, the light intensity of the line laser is the strongest.

15. The structured light module according to claim 13, wherein, when the optical shaping lens of each of the line laser emitter is a cylindrical lens, within an angular range of [-10, 10] degrees relative to the optical axis of the line laser emitter, the light intensity of the line laser is the strongest.

16. The structured light module according to any one of claims 1 to 12, wherein the angle between the optical axis of each of the line laser emitters and a baseline of the structured light module ranges from [50, 60] degrees.

17. The structured light module according to claim 16, wherein the angle between the optical axis of each of the line laser emitter and the baseline of the structured light module is 55.26 degrees.

18. An autonomous mobile device, comprising: a device body, on which a main controller and a structured light module are installed, the main controller being electrically connected to the structured light module;
wherein, the structured light module comprises: a first camera, line laser emitters distributed on both sides of the first camera, a second camera, and a module controller;
wherein, the module controller controls the line laser emitters to emit line lasers externally and controls the first camera to collect a first environmental image detected by the line lasers during their emission, and sends the first environmental image to the main controller; the main controller controls the second camera to collect a second environmental image within its field of view and performs functional control of the autonomous mobile device based on the first and second environmental images; wherein, the first environmental image includes a laser image with laser stripes produced when the line lasers encounter an object, and the second environmental image is a visible light image that does not include laser stripes.

19. A working method applicable to an autonomous mobile device equipped with a structured light module, the method comprising:
using structured light components and visual sensors in the structured light module to respectively collect structured light data and image data in an operation area ahead;
based on the image data, identifying a category of a target object present in the operation area ahead, and selecting a target machine behavior mode that matches the category of the target obj ect;
based on the structured light data, controlling the autonomous mobile device to perform an operation task in connection with the target object present in the operation area ahead according to the target machine behavior mode.

20. The method according to claim 19, wherein, before selecting the target machine behavior mode that matches the category of the target object, the method further comprises:
based on the structured light data, identifying a contour of the target object present in the operation area ahead;
adjusting the category of the target object based on the contour.

21. The method according to any one of claims 19 and 20, wherein, based on the structured light data, controlling the autonomous mobile device to perform the operation task in connection with the target object present in the operation area ahead according to the target machine behavior mode comprises:
based on the structured light data, identifying position information and/or shape parameters of the target object present in the operation area ahead;
based on the position information and/or shape parameters of the target object, controlling the autonomous mobile device to perform the operation task in connection with the target object according to the target machine behavior mode.

22. The method according to claim 21, wherein, when the category of the target object is prone to jamming and impassable, selecting the target machine behavior mode that matches the category of the target object comprises: selecting an obstacle avoidance behavior mode as the target machine behavior mode;
accordingly, based on the position information and/or shape parameters of the target object, controlling the autonomous mobile device to perform the operation task in connection with the target object according to the target machine behavior mode, comprising:
based on the position information and/or shape parameters, including contour parameters of the target object, controlling the autonomous mobile device to perform obstacle avoidance on the target object according to the obstacle avoidance behavior mode.

23. The method according to any one of claims 19 and 20, wherein, when the category of the target object is prone to jamming and passable, selecting the target machine behavior mode that matches the category of the target object comprises: selecting an accelerated passage behavior mode as the target machine behavior mode;
accordingly, based on position information and/or shape parameters of the target object, controlling the autonomous mobile device to perform the operation task in connection with the target object according to the target machine behavior mode, comprising:
controlling the autonomous mobile device to pass through a hollow area of the target object based on a hollow width and height found in the position information and/or shape parameters of the target object according to the accelerated passage behavior mode to continue performing the operation task.

24. The method according to claim 23, wherein the accelerated passage behavior mode comprises: a first indication parameter indicating an acceleration action and first execution parameters required for the acceleration action, where the first execution parameters include direction parameters, distance parameters, and speed parameters;
accordingly, controlling the autonomous mobile device to pass through a hollow area of the target object based on a hollow width and height found in the position information and/or shape parameters of the target object according to the accelerated passage behavior mode to continue performing the operation task, comprising:
adjusting an orientation of the autonomous mobile device based on the direction parameters combined with the hollow width and height from the position information and/or shape parameters of the target object, so that the autonomous mobile device faces the hollow area of the target object; and
controlling the autonomous mobile device to accelerate along a current orientation based on the distance and speed parameters until it passes through the hollow area of the target object.

25. The method according to any one of claims 19 and 20, wherein, when the category of the target object is prone to entanglement, selecting the target machine behavior mode that matches the category of the target object comprises: selecting a reduced-speed operation behavior mode as the target machine behavior mode;
accordingly, based on position information and/or shape parameters of the target object, controlling the autonomous mobile device to perform the operation task in connection with the target object according to the target machine behavior mode, comprising:
controlling the autonomous mobile device to perform the operation task in connection with the target object based on a contour edge position within the shape parameters of the target object, according to the reduced-speed operation behavior mode.

26. The method according to claim 25, wherein, the reduced-speed operation behavior mode comprises: a second indicator parameter that instructs deceleration and a second execution parameter required for the reduced-speed, where the second execution parameter includes at least an obstacle avoidance distance and a first side brush rotation speed that is less than a rotation speed threshold;
accordingly, controlling the autonomous mobile device to perform the operation task in connection with the target object based on a contour edge position within the shape parameters of the target object according to the reduced-speed operation behavior mode, comprising:
based on the contour edge position of the target object and the obstacle avoidance distance, controlling the autonomous mobile device to perform the operation task in a surrounding area at a distance greater than the obstacle avoidance distance from the target object; and,
when the autonomous mobile device climbs over the target object to perform the operation task, controlling the autonomous mobile device to drive its side brush to perform a cleaning operation task above the target object, based on height information of the contour edge within the shape parameters and the first side brush rotation speed.

27. The method according to any one of the claims 19 and 20, wherein, when the category of the target object is prone to dirtiness, selecting the target machine behavior mode that matches the category of the target object comprises: selecting an enhanced operation behavior mode as the target machine behavior mode;
accordingly, based on position information and/or shape parameters of the target object, controlling the autonomous mobile device to perform the operation task in connection with the target object according to the target machine behavior mode, comprising:
controlling the autonomous mobile device to perform the operation task in connection with the target object based on a contour edge position within the shape parameters of the target object according to the enhanced operation behavior mode.

28. The method according to claim 27, wherein, the enhanced operation behavior mode comprises: a third indicator parameter for an enhanced operation and a third execution parameter required for the enhanced operation, the third execution parameter includes at least the number of operations and a second side brush rotation speed greater than a rotation speed threshold;
accordingly, controlling the autonomous mobile device to perform the operation task in connection with the target object based on a contour edge position within the shape parameters of the target object according to the enhanced operation behavior mode, comprising:
controlling the autonomous mobile device to perform the operation task multiple times in a surrounding area of the target object according to the number of operations based on the contour edge position of the target object; and,
during each time of performing the operation task, controlling the autonomous mobile device to drive its side brush to perform cleaning tasks in the surrounding area of the target object based on the second side brush rotation speed.

29. The method according to any one of the claims 19 and 20, wherein, when the category of the target object is movable, selecting the target machine behavior mode that matches the category of the target object comprises: selecting a voice prompt behavior mode as the target machine behavior mode;
accordingly, based on position information and/or shape parameters of the target object, controlling the autonomous mobile device to perform the operation task in connection with the target object according to the target machine behavior mode, comprising:
based on the position information of the target object, controlling the autonomous mobile device to emit a voice prompt message to the target object according to the voice prompt behavior mode, to prompt the target object to change its state; and
based on the structured light data collected for the target object, identifying a latest state of the target object, and if the latest state meets requirements of the voice prompt, continuing to control the autonomous mobile device to perform the operation task in connection with the target object.

30. An autonomous mobile device, comprising: a device body equipped with one or more memory units, one or more processors, and a structured light module; wherein:
the structured light module comprises: a structured light component and a vision sensor;
the one or more memory units store computer programs; the one or more processors are configured to execute the computer programs to:
utilize the structured light component and vision sensor within the structured light module to respectively collect structured light data and image data from an operation area ahead;
based on the image data, identify a category of a target object present in the operation area ahead, and select a target machine behavior mode that matches to the category of the target obj ect;
based on the structured light data, control the autonomous mobile device according to the selected target machine behavior mode to perform an operation task in connection with the target objects present in the operation area ahead.

31. A computer-readable storage medium storing a computer program, wherein, when the computer program is executed by a processor, it causes the processor to implement the steps of any one of the methods described in claims 19-29.
